# EUROPÄISCHE PATENTSCHRIFT

(11) **EP 3 918 376 B1**
(45) Veröffentlichungstag und Bekanntmachung des Hinweises auf die Patenterteilung: **05.06.2024**
(21) Anmeldenummer: 19835427.6
(22) Anmeldetag: 30.12.2019
(51) Int. Cl.: G01V 1/38

(54) **SYSTEM, VERFAHREN UND VERARBEITUNGSMODUL ZUM DETEKTIEREN VON EIN ODER MEHREREN OBJEKTEN IM MEERESBODEN**
SYSTEM, METHODS AND PROCESSING MODULE FOR DETECTING ONE OR MORE OBJECTS IN THE SEABED
SYSTÈME, PROCÉDÉ ET MODULE DE TRAITEMENT PERMETTANT DE DÉTECTER UN OU DE PLUSIEURS OBJETS AU FOND DE LA MER

(30) Priorität: 01.02.2019 DE 102019102548
(43) Veröffentlichungstag der Anmeldung: 08.12.2021
(73) Patentinhaber: Fraunhofer-Gesellschaft zur Förderung der angewandten Forschung e.V., 80686 München (DE)
(72) Erfinder: RAMOS CORDOVA, Carlos Alejandro, 28359 Bremen (DE); PREU, Benedict, 28359 Bremen (DE); STANGE, Nikolas, 28359 Bremen (DE); SPIEß, Volkhard, 28219 Bremen (DE); WENAU, Stefan, 28213 Bremen (DE); KEIL, Hanno, 27321 Thedinghausen (DE)
(74) Vertreter: 2SPL Patentanwälte PartG mbB
(86) Internationale Anmeldenummer: PCT/EP2019/087154
(87) Internationale Veröffentlichungsnummer: WO 2020/156748

(56) Entgegenhaltungen:
- EP-A1- 2 733 508
- US-A1- 2007 223 306
- US-A1- 2013 170 317

## Beschreibung

### Technisches Gebiet

Ausführungsbeispiele beziehen sich auf ein System, auf Verfahren und auf ein Verarbeitungsmodul zum Detektieren von ein oder mehreren Objekten im Meeresboden, wobei die Detektion der ein oder mehreren Objekte auf der Streuung des zumindest einen akustischen Signals an den ein oder mehreren Objekten basiert.

### Hintergrund

Die Lokalisierung von Objekten verschiedenster Größen in marinen Sedimenten ist in vielen Fällen eine Voraussetzung für die Konstruktion von mariner Infrastruktur sowie für die wirtschaftliche Nutzung des Meeresbodens, z.B. bei Windenergieanlagen, Pipelines, Plattformen, Kabeltrassen, Bohrungen. Solche Objekte können Findlinge oder andere geologische Inhomogenitäten sein, aber auch nicht-detonierte Sprengkörper (UneXploded Ordnance: UXO) die in den obersten Sedimentschichten liegen. Findlinge stellen beispielsweise ein Problem z.B. in den Quartären Ablagerungen der Nord- und Ostsee und generell in vielen Flachmeergebieten der gemäßigten und höheren Breiten dar, während UXO beispielsweise in Nord- und Ostsee zu finden sind. Herkömmliche Methoden für die Erkundung des Untergrundes wie 2D/3D Reflektionsseismik, hochauflösende Akustik sowie Magnetik zeigen unterschiedliche Limitierungen bei der Objektdetektion in Sedimenten.

US 2007/223306 A1 befasst sich mit der Erfassung von maritimen seismischen Daten mittels eines losen Gitters, an dem seismische Instrumente angebracht sind, wobei das lose Gitter durch ein oder mehrere Schiffe gezogen wird. Die seismischen Instrumente werden genutzt, um Reflektionen eines seismischen Signals zu erfassen.

EP 2733 508 A1 befasst sich mit Verfahren und einem System zur Extrapolation von Wellenfeldern. Ähnlich wie in US 2007/223306 A1 werden hier seismische Instrumente an einem losen Gitter angebracht und genutzt, um Reflektionen eines seismischen Signals zu erfassen.

Die Lokalisierung von Objekten in marinen Sedimenten ist eine Aufgabe beim Ausbau der Offshoreinfrastruktur (Infrastruktur, die abseits der Küste auf den Meeresboden gebaut ist), die mit konventionellen Methoden häufig nur unzureichend gelöst werden kann.

### Zusammenfassung

Die hier beschriebene Erfindung kann in zumindest manchen Ausführungsbeispielen durch die hochgenaue Aufzeichnung des gestreuten Anteils des Wellenfeldes nach der Anregung durch eine akustische Quelle Objekte und Inhomogenitäten verschiedener Größen in marinen Sedimenten detektieren, lokalisieren und charakterisieren.

Die Detektion, Lokalisierung und Charakterisierung der Objekte und Inhomogenitäten wird erfindungsgemäß durch ein Verarbeitungsmodul entsprechend Anspruch 14 gewährleistet.

Die Erfindung basiert darauf, dass zur Detektion der ein oder mehreren Objekte die Streuung zumindest eines akustischen Signals an ein oder mehreren Objekten genutzt wird. Um diesen Effekt nutzen zu können wird das akustische Signal so gewählt, dass es auf die Größe der zu detektierenden Objekte angepasst ist, so dass die Wellenlänge des akustischen Signals etwa im gleichen Größenbereich wie die Größe der Objekte selbst ist. Dieses akustische Signal wird in Richtung des Meeresbodens ausgesandt, und wird dort an den Objekten, die im Meeresboden detektiert werden sollen, gestreut. Diese Streuung wird durch eine Mehrzahl von Empfängern aufgenommen (etwa zusammen mit der Reflektion des akustischen Signals) und an ein Verarbeitungsmodul zur Verarbeitung weitergeleitet. Dabei kann die Verarbeitung unmittelbar im Anschluss an die Erfassung erfolgen, oder Daten, die von den Empfängern bereitgestellt werden, können aufgezeichnet werden und zu einem späteren Zeitpunkt durch das Verarbeitungsmodul ausgewertet werden. Das Verarbeitungsmodul ist nun dazu ausgebildet, die von den Empfängern generierten Daten auszuwerten, dabei den Anteil derjenigen Daten zu separieren, die auf der Streuung des akustischen Signals an den ein oder mehreren Objekten basieren, und basierend auf diesen isolierten Daten die ein oder mehreren Objekte im Meeresboden zu detektieren. Aufgrund der dabei genutzten großen Wellenlängen, und damit auch niedrigen Frequenzen, kann das akustische Signal weit in den Meeresboden eindringen, so dass eine Detektion der ein oder mehreren Objekte viele Meter unterhalb des Meeresgrunds ermöglicht wird.

Ausführungsbeispiele schaffen somit ein System zum Detektieren von ein oder mehreren Objekten im Meeresboden gemäß Anspruch 1. Das System umfasst das Verarbeitungsmodul entsprechend Anspruch 14 und eine Befestigungsstruktur. Die Befestigungsstruktur ist dafür vorgesehen, um eine Signalquelle und eine Mehrzahl von Empfängern mechanisch mit einem Schiff oder mit einer Antriebseinheit zu koppeln. Dabei kann die Befestigungsstruktur etwa einteilig sein, also dazu ausgelegt sein, sowohl die Signalquelle als auch die Mehrzahl von Empfängern in einer zusammenhängenden Struktur mechanisch aneinander zu koppeln. Alternativ kann die Befestigungsstruktur mehrteilig sein, also zumindest zwei Komponenten umfassen, etwa eine Komponente für die Signalquelle und eine Komponente für die Mehrzahl von Empfängern. Das System umfasst die Signalquelle, die mechanisch mit der Befestigungsstruktur gekoppelt ist und die ausgebildet ist zum Aussenden zumindest eines akustischen Signals in Richtung des Meeresbodens. Eine Wellenlänge des akustischen Signals ist an eine erwartete Größe der ein oder mehreren Objekte angepasst, so dass die Wellenlänge des akustischen Signals zumindest 10% der erwarteten Größe und höchstens 1000% der erwarteten Größe der ein oder mehreren Objekte entspricht. Das System umfasst die Mehrzahl von Empfängern, die mechanisch mit der Befestigungsstruktur gekoppelt sind. Ein Abstand zwischen benachbarten Empfängern ist höchstens so groß wie die Hälfte der Wellenlänge des akustischen Signals. Die Mehrzahl von Empfängern ist ausgebildet, um basierend auf einer Streuung des zumindest einen akustischen Signals an den ein oder mehreren Objekten ein Empfängersignal zu generieren. Das System umfasst ferner das Verarbeitungsmodul, das ausgebildet ist zum Detektieren der ein oder mehreren Objekte basierend auf dem Empfängersignal. Die Detektion der ein oder mehreren Objekte basiert auf der Streuung des zumindest einen akustischen Signals an den ein oder mehreren Objekten.

Durch Anpassung der Wellenlänge des akustischen Signals an die Größe der zu detektierenden Objekte, sowie die Anordnung der Empfänger mit maximal einer halben Wellenlänge Abstand wird eine Detektion der ein oder mehreren Objekte im Meeresboden basierend auf der Streuung des akustischen Signals an den Objekten ermöglicht, was deren Detektion viele Meter unter dem Meeresboden ermöglicht, sowie eine Detektion von Objekten ermöglichen kann, die seitlich versetzt zu den Empfängern angeordnet sind.

Die Empfänger der Mehrzahl von Empfängern können beispielsweise in einem regelmäßigen oder unregelmäßigen Raster angeordnet sein. Das Verarbeitungsmodul kann ausgebildet sein, um basierend auf der Streuung des akustischen Signals an den ein oder mehreren Objekten die ein oder mehreren Objekte sowohl unterhalb des Rasters als auch versetzt zu dem Raster zu detektieren. Dazu kann die zumindest eine Signalquelle eine omnidirektionale Signalquelle sein. In anderen Worten kann die zumindest eine Signalquelle ausgebildet sein, um das akustische Signal so auszusenden, dass eine Schalldruckminderung von 3 dB bei 45° nicht überschritten wird. Dadurch, dass in Ausführungsbeispielen die Streuung des akustischen Signals zur Detektion der Objekte genutzt wird, kann ein größerer Bereich, der auch abseits des Rasters liegen kann, auf einmal überprüft werden.

Beispielsweise kann das Raster eine erste Ausdehnungsrichtung und eine zweite Ausdehnungsrichtung aufweisen. Die erste Ausdehnungsrichtung kann entlang einer vorgesehenen Bewegungsrichtung der Befestigungsstruktur definiert sein, und die zweite Ausdehnungsrichtung kann orthogonal zu der vorgesehenen Bewegungsrichtung der Befestigungsstruktur definiert sein (also quer zur vorgesehenen Bewegungsrichtung).

Die zumindest eine Signalquelle kann an verschiedenen Stellen angeordnet sein, etwa unabhängig von der Mehrzahl von Empfängern oder eingebettet in das Raster der Mehrzahl von Empfängern. In anderen Worten kann die zumindest eine Signalquelle in einer Verlängerung der ersten und/oder der zweiten Ausdehnungsrichtung relativ zu der Mehrzahl von Empfängern angeordnet sein. Die Signalquelle kann auch schräg zum Rahmen stehen, also in Verlängerung beider Ausdehnungsrichtungen. So kann die Signalquelle etwa unabhängig von der Mehrzahl von Empfängern angeordnet sein, was eine größere Flexibilität in der Wahl der Signalquellen und der Anordnung der einzelnen Komponenten ermöglicht. Alternativ kann die zumindest eine Signalquelle innerhalb des Rasters, in dem die Empfänger der Mehrzahl von Empfängern angeordnet sind, angeordnet sein. Dies ermöglicht eine Nutzung des Rasters, um auch die Signalquelle unterzubringen.

In manchen Ausführungsbeispielen kann eine sogenannte synthetische Apertur verwendet werden, d.h. eine Anzahl von Empfängern in Bewegungsrichtung kann durch ein Aussenden mehrerer akustischer Signale synthetisch vergrößert werden. So kann beispielsweise eine Apertur, also eine (räumliche) Ausdehnung, des Rasters in der zweiten Ausdehnungsrichtung, zumindest 25% größer sein als eine Apertur des Rasters in der ersten Ausdehnungsrichtung. Die Signalquelle kann ausgebildet sein, um mehrere akustische Signale in einer vordefinierten zeitlichen Abfolge in Richtung des Meeresbodens auszusenden. Das Empfängersignal kann auf einer Streuung der mehreren akustischen Signale an den ein oder mehreren Objekten basieren. Das Verarbeitungsmodul kann ausgebildet sein, um die ein oder mehreren Objekte basierend auf der Streuung der mehreren akustischen Signale an den ein oder mehreren Objekten zu detektieren. So können die mehreren akustischen Signale genutzt werden, um die effektive Apertur des Rasters in Bewegungsrichtung durch Signalverarbeitung künstlich zu vergrößern.

Die Wellenlänge des akustischen Signals beträgt zumindest 10% der erwarteten Größe der ein oder mehreren Objekte, und höchstens 1000% der erwarteten Größe der ein oder mehreren Objekte. Bei Wahl einer solchen Wellenlänge kann eine Weitwinkelstreuung entstehen, die zur Detektion der ein oder mehreren Objekte genutzt werden kann.

Die Mehrzahl von Empfängern kann beispielsweise in einem regelmäßigen Raster angeordnet sein, etwa in einem System aus logischen Spalten und Reihen. Beispielsweise kann die Mehrzahl von Empfängern in einer mehrdimensionalen Gitterstruktur (auch engl. Array) angeordnet sein. In anderen Worten kann die Mehrzahl von Empfängern in der ersten Ausdehnungsrichtung in einer Mehrzahl von logischen Spalten angeordnet sein. Die Mehrzahl von Empfängern kann in der zweiten Ausdehnungsrichtung in einer Mehrzahl von logischen Zeilen angeordnet sein. Der Abstand zwischen benachbarten Empfängern der Mehrzahl von Empfängern kann in der ersten Ausdehnungsrichtung durch einen mittleren Abstand zwischen benachbarten Spalten der Mehrzahl von Spalten definiert sein. Der Abstand zwischen benachbarten Empfängern der Mehrzahl von Empfängern in der zweiten Ausdehnungsrichtung kann durch einen mittleren Abstand zwischen benachbarten Zeilen der Mehrzahl von Zeilen definiert sein. Eine regelmäßige Anordnung ermöglicht eine höhere Auflösung als andere Anordnungen.

Alternativ können die Mehrzahl von Empfängern nicht in einer mehrdimensionalen Gitterstruktur angeordnet sein. Beispielsweise kann die Mehrzahl von Empfängern in einer Spiralstruktur angeordnet sein, oder in einem Raster, das auf einem verbesserten Zufallsverfahren basiert. Dies ermöglicht eine verbesserte Signalverstärkung, etwa in Rastern, in denen sich kein Abstand der Empfänger zum Zentrum des Rasters wiederholt.

Die Befestigungsstruktur kann vielfältig implementiert sein. So kann die mehrdimensionale Gitterstruktur etwa an einem starren Rahmen der Befestigungsstruktur angeordnet sein. Dies ermöglicht eine genaue Einmessung der Empfänger, etwa über GPS (Globales Positionierungssystem).

Alternativ können die Empfänger an Ketten befestigt sein. In manchen Ausführungsbeispielen kann das System ferner ein Schiff umfassen. Die Mehrzahl von Ketten können an dem Schiff befestigt sein. Alternativ kann die mehrdimensionale Gitterstruktur an einer starren Zugeinheit der Befestigungsstruktur (außerhalb eines Schiffes) befestigt sein. Die Mehrzahl von logischen Spalten kann als eine Mehrzahl von Ketten von Empfängern ausgebildet sein. Die Empfänger einer logischen Reihe der Mehrzahl von logischen Reihen können durch ein oder mehrere starre Querverbindungen miteinander gekoppelt sein. Dies ermöglicht die Einhaltung der Querabstände zwischen den Empfängern. Alternativ kann die Befestigungsstruktur zumindest ein Scherbrett umfassen. Die Empfänger einer logischen Reihe der Mehrzahl von logischen Reihen können durch ein oder mehrere flexible Querverbindungen miteinander gekoppelt sein. Das zumindest eine Scherbrett kann im Zusammenspiel mit den flexiblen Querverbindungen dazu ausgelegt sein, die Mehrzahl von Ketten von Empfängern in eine vordefinierte räumliche Ausdehnung zu spannen.

Nach Aussenden des akustischen Signals kann in vielen Ausführungsbeispielen das Empfängersignal nicht nur auf der Streuung des akustischen Signals, sondern auch auf einer Reflektion des akustischen Signals basieren. Diese beiden Signalanteile können nachfolgend durch das Verarbeitungsmodul getrennt werden. In anderen Worten kann das Empfängersignal einen ersten Signalanteil umfassen, der auf der Streuung des zumindest einen akustischen Signals an den ein oder mehreren Objekten basiert. Das Empfängersignal kann einen zweiten Signalanteil umfassen, der auf einer Reflektion des zumindest einen akustischen Signals basiert. Das Verarbeitungsmodul kann ausgebildet sein, um den ersten Signalanteil von dem zweiten Signalanteil zu trennen, und um basierend auf dem ersten Signalanteil die ein oder mehreren Objekte zu detektieren. Das Verarbeitungsmodul kann ausgebildet sein, um eine Information über eine Distanz der ein oder mehreren Objekten basierend auf dem zweiten Signalanteil (und basierend auf dem ersten Signalanteil) für diejenigen Objekte zu bestimmen, die sich unterhalb des Rasters befinden. So kann der ersten Signalanteil genutzt werden, um die ein oder mehreren Objekte zu detektieren, etwa einen Winkel eines Versatzes der ein oder mehreren Objekte zur Signalquelle, und der zweite Signalanteil kann genutzt werden, um die Distanz zu den ein oder mehreren Objekten zu bestimmen (zumindest sofern sich diese unterhalb der Empfänger befinden).

In manchen Ausführungsbeispielen umfasst das System zumindest eine weitere Signalquelle, ausgebildet zum Aussenden zumindest eines weiteren akustischen Signals in Richtung des Meeresbodens. Eine Wellenlänge des weiteren akustischen Signals kann zumindest 10% kleiner oder größer sein als die Wellenlänge des akustischen Signals. Alternativ kann das weitere akustische Signal substantiell die gleiche Wellenlänge aufweisen wie das akustische Signal. Die weitere Signalquelle kann dazu ausgebildet sein, um das weitere akustische Signal zeitversetzt zu dem akustischen Signal auszusenden. So können beispielsweise zeitversetzt Objekte detektiert werden, deren Größen in unterschiedlichen Größenbereichen liegen. Sind die Wellenlängen gleich, so kann eine Wiederholrate für das Aussenden der akustischen Signale erhöht werden.

Ausführungsbeispiele schaffen ferner ein Verarbeitungsmodul zum Detektieren von ein oder mehreren Objekten im Meeresboden, wie es in Anspruch 14 definiert ist. Das Verarbeitungsmodul ist ausgebildet zum Erhalten einer Information über zumindest ein akustisches Signal einer akustischen Signalquelle. Eine Wellenlänge des akustischen Signals ist an eine erwartete Größe der ein oder mehreren Objekte angepasst, so dass die Wellenlänge des akustischen Signals zumindest 10% der erwarteten Größe und höchstens 1000% der erwarteten Größe der ein oder mehreren Objekte entspricht. Das Verarbeitungsmodul ist ausgebildet zum Erhalten eines Empfängersignals von einer Mehrzahl von Empfängern. Das Empfängersignal basiert auf einer Streuung des zumindest einen akustischen Signals an den ein oder mehreren Objekten. Das Verarbeitungsmodul ist ausgebildet zum Detektieren der ein oder mehreren Objekte basierend auf dem Empfängersignal. Die Detektion der ein oder mehreren Objekte basiert auf der Streuung des zumindest einen akustischen Signals an den ein oder mehreren Objekten.

Ausführungsbeispiele schaffen ferner ein Verfahren zum Detektieren von ein oder mehreren Objekten im Meeresboden. Das Verfahren umfasst ein Aussenden eines akustischen Signals durch eine akustische Signalquelle. Eine Wellenlänge des akustischen Signals ist an eine erwartete Größe der ein oder mehreren Objekte angepasst, so dass die Wellenlänge des akustischen Signals zumindest 10% der erwarteten Größe und höchstens 1000% der erwarteten Größe der ein oder mehreren Objekte entspricht. Das Verfahren umfasst ferner ein Generieren eines Empfängersignals durch eine Mehrzahl von Empfängern. Ein Abstand zwischen benachbarten Empfängern ist höchstens so groß ist wie die Hälfte der Wellenlänge des akustischen Signals. Das Empfängersignal basiert auf einer Streuung des zumindest einen akustischen Signals an den ein oder mehreren Objekten. Das Verfahren umfasst ferner ein Detektieren der ein oder mehreren Objekte basierend auf dem Empfängersignal. Die Detektion der ein oder mehreren Objekte basiert auf der Streuung des zumindest einen akustischen Signals an den ein oder mehreren Objekten.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fig.: 1a zeigt ein schematisches Diagramm eines Systems zum Detektieren von ein oder mehreren Objekten im Meeresboden, sowie eines Verarbeitungsmoduls eines solchen Systems;
- Fig.: 1b zeigt ein Flussdiagramm eines Verfahrens zum Detektieren von ein oder mehreren Objekten im Meeresboden;
- Fig. 2: zeigt eine schematische Skizze eines Schleppsystems mit Befestigungsstruktur, Signalquelle und Empfängerarray, zur Aufnahme gestreuter Energie von Objekten in marinen Sedimenten;
- Fig. 3: zeigt ein Diagramm eines Diffraktionsregimes und einer Weitwinkelstreuung abhängig von der normalisierten Längenskala eines streuenden Objektes;
- Fig. 4a: zeigt eine Geometrie eines Schlepparrays nach einem Ausführungsbeispiel;
- Fig. 4b: zeigt ein Strahlprofil für das Schlepparray;
- Fig. 4c: zeigt einen Schnitt durch das Strahlprofil;
- Fig.: 4dzeigt ein weiteres Strahlprofil für das Schlepparray unter Nutzung einer synthetischen Apertur;
- Fig. 5: zeigt einen Zusammenhang der erreichbaren lateralen Auflösung in Abhängigkeit von der Größe des Empfängerarrays; und
- Fign. 6a bis 6b: zeigen schematische Diagramme eines festen, schwimmfähigen Rahmens, wobei Fig. 6a eine Ansicht von Oben, Fig. 6b eine Ansicht von Vorne, und Fig. 6c eine Ansicht von der Seite zeigt.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

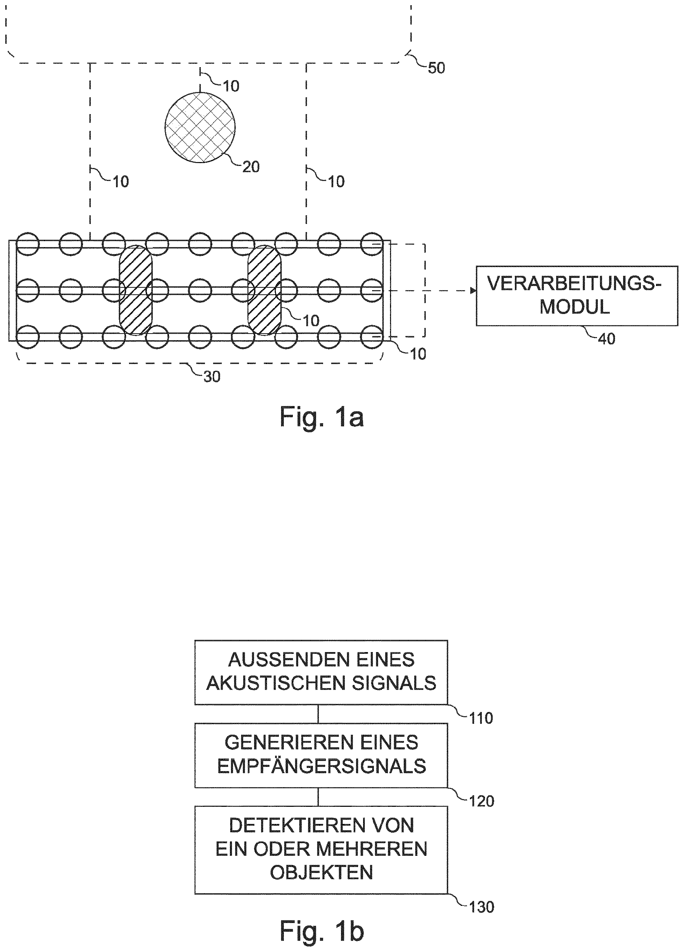

Fig. 1a zeigt ein schematisches Diagramm eines Systems 100 zum Detektieren von ein oder mehreren Objekten im Meeresboden. Das System umfasst eine Befestigungsstruktur 10. Die Befestigungsstruktur ist dafür vorgesehen, eine Signalquelle 20 und eine Mehrzahl von Empfängern 30 mechanisch mit einem Schiff oder mit einer Antriebseinheit zu koppeln. Das System 100 umfasst ferner die Signalquelle 20, die ausgebildet ist zum Aussenden zumindest eines akustischen Signals in Richtung des Meeresbodens. Eine Wellenlänge des akustischen Signals ist an eine erwartete Größe der ein oder mehreren Objekte angepasst. Das System umfasst ferner die Mehrzahl von Empfängern 30. Ein Abstand zwischen benachbarten Empfängern ist höchstens so groß wie die Hälfte der Wellenlänge des akustischen Signals. Die Mehrzahl von Empfängern ist ausgebildet, um basierend auf einer Streuung des zumindest einen akustischen Signals an den ein oder mehreren Objekten ein Empfängersignal zu generieren. Das System umfasst ferner ein Verarbeitungsmodul 40, das ausgebildet ist zum Detektieren der ein oder mehreren Objekte basierend auf dem Empfängersignal. Die Detektion der ein oder mehreren Objekte basiert auf der Streuung des zumindest einen akustischen Signals an den ein oder mehreren Objekten.

Fig. 1b zeigt ein Flussdiagramm eines (entsprechenden) Verfahrens zum Detektieren von ein oder mehreren Objekten im Meeresboden. Das Verfahren umfasst ein Aussenden 110 eines akustischen Signals durch eine akustische Signalquelle. Eine Wellenlänge des akustischen Signals an eine erwartete Größe der ein oder mehreren Objekte angepasst. Das Verfahren umfasst ferner ein Generieren 120 eines Empfängersignals durch eine Mehrzahl von Empfängern. Ein Abstand zwischen benachbarten Empfängern ist höchstens so groß wie die Hälfte der Wellenlänge des akustischen Signals. Das Empfängersignal basiert auf einer Streuung des zumindest einen akustischen Signals an den ein oder mehreren Objekten. Das Verfahren umfasst ferner ein Detektieren 130 der ein oder mehreren Objekte basierend auf dem Empfängersignal. Die Detektion der ein oder mehreren Objekte basiert auf der Streuung des zumindest einen akustischen Signals an den ein oder mehreren Objekten.

Die folgende Beschreibung bezieht sich sowohl auf das System der Fig. 1a, das Verfahren von Fig. 1b, als auch auf das Verarbeitungsmodul 40 in Isolation. Dabei können Merkmale des Systems auch im Verfahren und/oder durch das Verarbeitungsmodul implementiert sein, und umgekehrt.

Vorliegende Ausführungsbeispiele beziehen sich auf ein System und ein Verfahren zum Detektieren von ein oder mehreren Objekten im Meeresboden, sowie auf einzelne Komponenten eines solchen Systems, sowie die Verfahren, die durch diese Komponenten ausgeführt werden. Dabei ist das System beispielsweise dazu vorgesehen, Objekte unterhalb eines Meeresbodens zu detektieren, also etwa Objekte die sich etwa im Sediment des Meeresbodens befinden. Das System kann beispielsweise dazu ausgelegt sein, um die ein oder mehreren Objekte innerhalb von 10 m (oder innerhalb von 15 m, innerhalb von 20 m) unterhalb des Meeresbodens zu detektieren. Eine Detektionstiefe des Systems kann beispielsweise zumindest 10 m (oder zumindest 15 m, zumindest 20 m) in den Meeresboden hineinragen. Die ein oder mehreren Objekte können beispielswese (große, isolierte) Gesteinsbrocken sein, etwa Findlinge, die sich im Meeresboden befinden. In anderen Ausführungsbeispielen können die ein oder mehreren Objekte etwa Munition sein, die nicht explodiert ist, sog. UneXploded Ordnance (UXO, Blindgänger). Diese Objekte können etwa eine Gefahr darstellen, wenn Strukturen, wie etwa Windkraftwerke oder Bohrplattformen im Meeresboden auf Fundamenten gebaut werden sollen, die in den Meeresboden hineinragen. Um diese Objekte zu detektieren nutzen Ausführungsbeispiele, anders als andere Ansätze, nicht die Reflektionen, die von einer Signalquelle an den Objekten hervorgerufen werden, sondern die Streuung eines akustischen Signals an den jeweiligen Objekten. Um diese Streuungseffekte nutzen zu können ist die Wellenlänge des akustischen Signals, das für die Detektion genutzt wird, auf die Größe der Objekte abgestimmt, die detektiert werden sollen. Um eine Weitwinkelstreuung zu erhalten, auf der die Detektion basieren kann, kann die Wellenlänge des akustischen Signals in der gleichen Größenordnung sein, wie die Größe der Objekte selbst.

Das System umfasst die Befestigungsstruktur 10. Der Term "Befestigungsstruktur" steht dabei nicht zwangsläufig für eine zusammenhängende Struktur. So kann die Befestigungsstruktur etwa eine erste Teilstruktur umfassen, die dazu ausgelegt ist, um die zumindest eine Signalquelle mit dem Schiff oder Antriebseinheit mechanisch zu koppeln, und die Befestigungsstruktur kann eine zweite Teilstruktur umfassen, die dazu ausgelegt ist, um die Mehrzahl von Empfängern mit dem Schiff oder Antriebseinheit mechanisch zu koppeln. Dabei können die erste und die zweite Teilstruktur gegenseitig entkoppelt sein, also etwa nicht zusammenhängend ausgeführt sein. So kann die Befestigungsstruktur etwa einen (festen) Rahmen umfassen, an dem die Mehrzahl von Empfängern befestigt ist. Die Signalquelle kann mit dem Rahmen mechanisch gekoppelt sein, muss dies aber nicht, sondern kann auch unabhängig davon mit dem Schiff oder der Antriebseinheit mechanisch gekoppelt sein. Alternativ kann die Befestigungsstruktur zusammenhängend ausgeführt sein, also etwa auch die zumindest eine Signalquelle mechanisch mit der Mehrzahl von Empfängern koppeln.

Die Befestigungsstruktur ist dafür vorgesehen, die Signalquelle 20 und die Mehrzahl von Empfängern 30 mechanisch mit dem Schiff oder mit der Antriebseinheit zu koppeln. Folglich kann das System auch das Schiff oder die Antriebseinheit umfassen. Das Schiff kann beispielsweise ein Vermessungsschiff sein. Die Befestigungsstruktur kann dazu ausgelegt sein, um von dem Schiff gezogen zu werden. Alternativ kann das System auch ohne Schiff selbstfahrend sein, also auch die Antriebseinheit umfassen, die ausgebildet sein kann, um das System ferngesteuert oder nach einem vorgegebenen Muster (etwa im Zusammenspiel mit einer Steuereinheit) über die Meeresoberfläche zu bewegen. Die Antriebseinheit kann dabei entsprechende Antriebs- und Steuerkomponenten umfassen, etwa einen Antriebsmotor und die Steuereinheit.

In Ausführungsbeispielen ist die Mehrzahl von Empfängen über eine Fläche verteilt. Diese Fläche bildet die Apertur der Mehrzahl von Empfängern, d.h. je größer die Fläche ist, desto größer ist auch die Apertur der Mehrzahl von Empfängern. Im Folgenden wird diese Fläche als Raster bezeichnet, der Begriff "Apertur" kann aber auch synonym genutzt werden. Dabei impliziert der Begriff "Raster" nicht, dass die Mehrzahl von Empfängern zwangsläufig in einem regelmäßigen Muster angeordnet sein muss, etwa in einer zwei- oder dreidimensionalen Gitterstruktur, dies ist lediglich ein Ausführungsbeispiel. Alternativ kommen auch andere, regelmäßige oder unregelmäßige Muster in Betracht, etwa ein spiralförmiges Muster oder ein (verbessertes pseudo-) zufälliges Muster. Das Raster kann eine erste Ausdehnungsrichtung und eine zweite Ausdehnungsrichtung aufweisen. Die erste Ausdehnungsrichtung kann entlang einer vorgesehenen Bewegungsrichtung der Befestigungsstruktur definiert sein. Die zweite Ausdehnungsrichtung kann orthogonal (quer) zu der vorgesehenen Bewegungsrichtung der Befestigungsstruktur 10 definiert sein.

Somit können die Empfänger der Mehrzahl von Empfängern 30 in einem regelmäßigen oder unregelmäßigen Raster angeordnet sein, das die Apertur der Mehrzahl von Empfängern bildet. Das Verarbeitungsmodul kann ausgebildet sein, um basierend auf der Streuung des akustischen Signals an den ein oder mehreren Objekten die ein oder mehreren Objekte sowohl unterhalb des Rasters (der Fläche, der Apertur) als auch versetzt zu dem Raster zu detektieren, etwa zumindest 10° versetzt (oder zumindest 20° versetzt, zumindest 30° versetzt, zumindest 45° versetzt). Bei einer großen Apertur kann der Winkel mehr als 45° betragen.

Das System umfasst ferner die zumindest eine Signalquelle 20. Die zumindest eine Signalquelle kann dabei an verschiedenen Positionen angeordnet sein, etwa außerhalb des Rasters, oder auch innerhalb des Rasters. Beispielsweise kann die zumindest eine Signalquelle 20 in einer Verlängerung der ersten oder der zweiten Ausdehnungsrichtung relativ zu der Mehrzahl von Empfängern angeordnet sein. Alternativ kann die Signalquelle in einer beliebigen Position neben dem Raster angeordnet sein. Aber auch innerhalb des Rasters kann die zumindest eine Signalquelle angeordnet sein. In anderen Worten kann die zumindest eine Signalquelle 20 innerhalb des Rasters, in dem die Empfänger der Mehrzahl von Empfängern angeordnet sind, angeordnet sein.

Die zumindest eine Signalquelle ist ausgebildet zum Aussenden zumindest eines akustischen Signals in Richtung des Meeresbodens. Dazu kann die zumindest eine Signalquelle etwa so an der Befestigungsstruktur angeordnet sein, dass sich die zumindest eine Signalquelle im Einsatz unter Wasser befindet. Die zumindest eine Signalquelle kann dabei eine akustische und/oder seismische Signalquelle sein, etwa eine GI-Gun (Generator-Injector-Gun, Generator-Injektor-Kanone), ein Sparker (Schallquelle mit elektrischer Entladung), oder ein Boomer (Schallquelle, die die Energie in Kondensatoren speichert und über eine flache spiralförmige Spule abgibt, so dass Wasser durch eine benachbart angeordnete Kupferplatte verdrängt wird). Die Begriffe akustisch und seismisch können hier austauschbar verwendet werden, da im vorliegenden Ansatz Wellenlängen verwendet werden, die sowohl akustischen als auch seismischen Signalen zugeordnet werden können. So kann das akustische Signal in anderer Lesart auch ein seismisches Signal sein. Die zumindest eine Signalquelle 20 kann eine omnidirektionale Signalquelle sein. In anderen Worten kann die zumindest eine Signalquelle 20 ausgebildet ist, sein das akustische Signal so auszusenden, dass eine Schalldruckminderung von 3 dB bei 45° (gegenüber einer Normale, die von der zumindest einen Signalquelle ausgeht) nicht überschritten wird.

Die Wellenlänge des akustischen Signals ist an eine erwartete Größe der ein oder mehreren Objekte angepasst. Die erwartete Größe der ein oder mehreren Objekte kann beispielsweise ein Wert sein, der durch das Ziel der Detektion vorgegeben ist. Sollen etwa Findlinge gefunden werden, so kann eine andere Wellenlänge genutzt werden als in einem Fall, in dem Munition gefunden werden soll, oder etwa ein versunkenes Schiff. So kann die Wellenlänge des akustischen (oder seismischen) Signals im gleichen Bereich liegen wie die erwartete Größe der ein oder mehreren Objekte selbst. Die Wellenlänge des akustischen Signals beträgt zumindest 10% (oder zumindest 20%, zumindest 30%, zumindest 50%) der erwarteten Größe der ein oder mehreren Objekte. Die Wellenlänge des akustischen Signals beträgt höchstens 1000% (oder höchstens 800%, höchstens 500%) der erwarteten Größe der ein oder mehreren Objekte. Das vorliegende System und Verfahren kann in vielen Fällen genutzt werden, um eher größere Objekte, wie etwa Findlinge oder Blindgänger, zu detektieren. So kann die Wellenlänge des akustischen Signals etwa zumindest 50 cm (oder zumindest 80 cm, zumindest 100 cm, zumindest 150 cm) betragen. Dabei kann das System auch mehrere Signalquellen umfassen, die das akustische Signal mit der gleichen Wellenlänge aussenden, etwa um eine schnellere Abfolge im Aussenden mehrerer akustischer Signale zu erreichen, etwa bei der Nutzung einer synthetischen Apertur.

Unterschiedliche Wellenlängen können beispielsweise auch zeitversetzt in einem Detektionsvorgang genutzt werden, etwa indem entsprechend mehrere akustische Signale zeitversetzt durch die Signalquellen ausgesandt werden. So kann das System zumindest eine weitere Signalquelle umfassen, die ausgebildet ist zum Aussenden zumindest eines weiteren akustischen Signals in Richtung des Meeresbodens. Eine Wellenlänge des weiteren akustischen Signals kann zumindest 10% (oder zumindest 20%, zumindest 50%) kleiner oder größer sein als die Wellenlänge des akustischen Signals. Die weitere Signalquelle kann ausgebildet sein, um das weitere akustische Signal zeitversetzt zu dem akustischen Signal auszusenden. Dabei kann die Wellenlänge des weiteren akustischen Signals auch an die erwartete Größe der ein oder mehreren Objekte angepasst sein, etwa falls Objekte detektiert werden sollen, die in unterschiedlichen Größenbereichen liegen.

Das System umfasst ferner die Mehrzahl von Empfängern 30. Die Empfänger der Mehrzahl von Empfängern können beispielsweise Hydrophone sein, also Mikrofone, die unter Wasser zum Aufnehmen oder Hören von Unterwasserschall verwendet werden können. Die Mehrzahl von Empfängern können beispielsweise ausgebildet sein, um eine Wellenfront, die durch Streuung (und optional auch Reflektion) des zumindest einen akustischen Signals an den ein oder mehreren Objekten (und optional auch an dem Meeresboden) entstanden ist, zu erfassen und basierend auf der erfassten Wellenfront das Empfängersignal zu generieren. So ist die Mehrzahl von Empfängern ausgebildet, um zumindest basierend auf einer Streuung des zumindest einen akustischen Signals an den ein oder mehreren Objekten das Empfängersignal zu generieren. Häufig werden von Empfängern sowohl die Streuung als auch die Reflektion des akustischen Signals erfasst. In diesen Fällen können die Anteile, die auf der Streuung basieren, und die Anteile, die auf der Reflektion basieren, durch das Verarbeitungsmodul getrennt werden. In anderen Worten kann das Empfängersignal einen ersten Signalanteil umfassen, der auf der Streuung des zumindest einen akustischen Signals an den ein oder mehreren Objekten basiert. Das Empfängersignal kann ferner einen zweiten Signalanteil umfassen, der auf einer Reflektion des zumindest einen akustischen Signals basiert. Das Verarbeitungsmodul 40 kann ausgebildet sein, um den ersten Signalanteil von dem zweiten Signalanteil zu trennen. Das Verarbeitungsmodul kann ferner ausgebildet sein, um basierend auf dem ersten Signalanteil die ein oder mehreren Objekte zu detektieren. Der zweite Signalanteil kann wiederum genutzt werden, um die Distanz der ein oder mehreren Objekte relativ zu der Mehrzahl von Empfängern zu bestimmen, zumindest sofern diese unterhalb des Rasters angeordnet sind. So kann das Verarbeitungsmodul ferner ausgebildet sein, um eine Information über eine Distanz der ein oder mehreren Objekten (relativ zu der Mehrzahl von Empfängern und/oder relativ zur Signalquelle) basierend auf dem zweiten Signalanteil (und basierend auf dem ersten Signalanteil) für diejenigen Objekte zu bestimmen, die sich unterhalb des Rasters befinden. Alternativ kann die Mehrzahl von Empfängern ausgebildet sein, um lediglich die Streuung des akustischen Signals an den ein oder mehreren Objekten zu erfassen und basierend darauf das Empfängersignal zu generieren.

Die Mehrzahl von Empfängern kann dabei in einem beliebigen Raster angeordnet sein, solange zumindest die (mittleren) Abständen zwischen den Empfängern höchstens so groß sind (oder kleiner sind) als die Hälfte der Wellenlänge des akustischen Signals (oder kleiner als die Hälfte des kurzwelligsten Signals bei mehreren akustischen Signalen). So kann, etwa um eine Auflösung des Systems zu erhöhen, die Mehrzahl von Empfängern 30 in einer mehrdimensionalen (etwa einer zweidimensionalen oder in einer dreidimensionalen) Gitterstruktur angeordnet sein. Dabei ist in einer dreidimensionalen Gitterstruktur etwa ein Einmessen der Empfänger, auch basierend auf ihrer Anordnung in der dritten Dimension durchzuführen. Alternativ kann die Mehrzahl von Empfängern 30 nicht in einer mehrdimensionalen Gitterstruktur angeordnet sein. Insbesondere kann die Mehrzahl von Empfängern in einer Spiralstruktur angeordnet sein, oder in einer (verbesserten pseudo-) zufälligen Anordnung. Dabei kann der Abstand zwischen benachbarten Empfängern (etwa in der zweiten Ausdehnungsrichtung) höchstens so groß wie (oder kleiner als) 50% der Wellenlänge des akustischen Signals sein. Umfasst das Raster der Mehrzahl von Empfängern mehr als eine Reihe von Empfängern (in der zweiten Ausdehnungsrichtung), so kann auch der Abstand zwischen benachbarten Empfängern in der ersten Ausdehnungsrichtung so groß (oder kleiner als) wie 50% der Wellenlänge des akustischen Signals sein. Dabei wird eine Untergrenze etwa durch den Aufwand definiert, der betrieben werden muss, um die Dichte der Empfänger zu erhöhen.

Dabei kann der Abstand zwischen den Empfängern jeweils entlang einer der beiden Ausdehnungsrichtungen definiert sein, d.h. der Abstand kann entlang der ersten Ausdehnungsrichtung und/oder entlang der zweiten Ausdehnungsrichtung definiert sein. Beispielsweise kann die Mehrzahl von Empfängern 30 in der ersten Ausdehnungsrichtung in einer Mehrzahl von logischen Spalten angeordnet sein. Die Mehrzahl von Empfängern 30 kann in der zweiten Ausdehnungsrichtung in einer Mehrzahl von logischen Zeilen angeordnet sein. Der Abstand zwischen benachbarten Empfängern der Mehrzahl von Empfängern in der ersten Ausdehnungsrichtung kann durch einen mittleren (oder maximalen) Abstand zwischen benachbarten Spalten der Mehrzahl von Spalten definiert sein. Der Abstand zwischen benachbarten Empfängern der Mehrzahl von Empfängern in der zweiten Ausdehnungsrichtung kann durch einen mittleren (oder maximalen) Abstand zwischen benachbarten Zeilen der Mehrzahl von Zeilen definiert sein.

Durch die Größe der Apertur, also des Rasters, wird die Auflösung des Systems definiert. Daher kann eine Ausdehnung des Rasters in der zweiten Ausdehnungsrichtung zumindest ein zweifaches (oder zumindest ein Dreifaches, ein Fünffaches) einer Wellenlänge des akustischen Signals betragen. Eine Ausdehnung des Rasters in der zweiten Ausdehnungsrichtung, das ein Fünffaches der Wellenlänge des akustischen Signals beträgt, stellt einen guten Kompromiss zwischen Auflösung und Handhabbarkeit dar. In der ersten Ausdehnungsrichtung kann die Ausdehnung des Rasters, etwa im Falle einer synthetischen Apertur, kleiner sein. So kann ein Ausführungsbeispiel des Systems etwa eine einzige Zeile von Empfängern umfassen, und drei oder mehr Reihen von Empfängern. Auch hier kann durch das Vorsehen mehrerer Reihen die Auflösung des Systems gesteigert werden. Nach oben hin kann die Größe der Apertur lediglich durch die Handhabbarkeit des Systems beschränkt sein.

Das System umfasst ferner das Verarbeitungsmodul 40, das ausgebildet ist zum Detektieren der ein oder mehreren Objekte basierend auf dem Empfängersignal. Die Detektion der ein oder mehreren Objekte basiert auf der Streuung des zumindest einen akustischen Signals an den ein oder mehreren Objekten.

Dabei kann die Detektion sowohl unmittelbar nach der Generierung des Empfängersignals als auch zu einem späteren Zeitpunkt durchgeführt werden. Dabei können zu einem ersten Zeitpunkt die Daten gespeichert werden, die Verarbeitung kann später (zu einem zweiten Zeitpunkt) durchgeführt werden, diese muss nicht notwendigerweise bei der Aufzeichnung geschehen. So kann das Verarbeitungsmodul oder ein Kontrollmodul der Mehrzahl von Empfängern ausgebildet sein, um das Empfängersignal auf einem Speicher zu speichern, etwa auf einem Festspeicher oder auf einem Bandspeicher. Das Verarbeitungsmodul kann ausgebildet sein, um das Empfängersignal aus dem Speicher auszulesen oder das Empfängersignal von dem Speicher zu erhalten und die Detektion der ein oder mehreren Objekte im Nachhinein durchzuführen. Beispielsweis kann das Verarbeitungsmodul ausgebildet sein, um die Detektion der ein oder mehreren Objekte nach Abschluss einer Messfahrt an Land durchzuführen.

Um die Detektion durchführen zu können, kann das Empfängersignal hochgenau mit einer Position des Empfängerrasters zum Zeitpunkt der Generierung des Empfängersignals verknüpft werden. Um dies zu ermöglichen, kann das System ferner zumindest einen GPS (Globales Positionierungs-System)-Empfänger und (optional) zumindest einen Bewegungssensor umfassen. Dabei kann eine Kontrolleinheit der Mehrzahl von Empfängern, das Verarbeitungsmodul oder ein Aufzeichnungsmodul den GPS-Empfänger und/oder den Bewegungssensor umfassen, um das Empfängersignal mit der Position der Mehrzahl von Empfängern zu verknüpfen. Zudem kann ein GPS-Empfänger und (optional) ein Bewegungssensor an der Signalquelle angeordnet sein. So kann das Verarbeitungsmodul oder das Aufzeichnungsmodul ausgebildet sein, um auch die Position der Signalquelle mit dem Empfängersignal zu verknüpfen, also zusammen mit dem Empfängersignal zu speichern.

Dabei kann das Verarbeitungsmodul ausgebildet sein, um ein oder mehrere Unregelmäßigkeiten im Empfängersignal zu bestimmen, und um basierend auf den ein oder mehreren Unregelmäßigkeiten die ein oder mehreren Objekte zu detektieren. Dabei kann das Verarbeitungsmodul beispielsweise ausgebildet sein, einen Versatz (etwa einen Winkelversatz) der ein oder mehreren Objekte relativ zu einer Position der zumindest einen Signalquelle und/oder relativ zu einer Position der Mehrzahl von Empfängern basierend auf dem Empfängersignal (etwa basierend auf den ein oder mehreren Unregelmäßigkeiten) zu bestimmen.

Somit schaffen Ausführungsbeispiele das Verarbeitungsmodul, sowie ein Verfahren für ein Verarbeitungsmodul in Isolation. Das Verarbeitungsmodul ist beispielsweise ausgebildet zum Erhalten einer Information über zumindest ein akustisches Signal einer akustischen Signalquelle 20. Eine Wellenlänge des akustischen Signals ist an eine erwartete Größe der ein oder mehreren Objekte angepasst. Beispielsweise kann das Verarbeitungsmodul ausgebildet sein, um die zumindest seine Signalquelle zu steuern, wobei die Information über das zumindest eine akustische Signal auf der Steuerung der zumindest einen Signalquelle basiert. Alternativ kann das Verarbeitungsmodul lediglich Information über einen Aussendezeitpunkt des akustischen Signals und/oder Information über die Wellenlänge aus einem Speicher auslesen, etwa aus einem Speicher, der auch das Empfängersignal umfasst, falls die Detektion der ein oder mehreren Objekte im Nachhinein ausgeführt wird. Das Verarbeitungsmodul ist ferner ausgebildet zum Erhalten des Empfängersignals von der Mehrzahl von Empfängern 30. Dabei kann das Verarbeitungsmodul ausgebildet sein, um das Empfängersignal direkt von der Mehrzahl von Empfängern zu erhalten oder zu empfangen, etwa falls die Detektion der Objekte unmittelbar durchgeführt wird. Alternativ kann das Verarbeitungsmodul ausgebildet sein, um das Empfängermodul aus einem Speicher auszulesen. Das Empfängersignal basiert auf der Streuung des zumindest einen akustischen Signals an den ein oder mehreren Objekten. Das Empfängersignal ist ferner ausgebildet zum Detektieren der ein oder mehreren Objekte basierend auf dem Empfängersignal. Die Detektion der ein oder mehreren Objekte basiert auf der Streuung des zumindest einen akustischen Signals an den ein oder mehreren Objekten.

Ein entsprechendes Verfahren umfasst ein Erhalten der Information über das zumindest eine akustische Signal der akustischen Signalquelle 20, wobei eine Wellenlänge des akustischen Signals an eine erwartete Größe der ein oder mehreren Objekte angepasst ist. Das Verfahren umfasst ferner ein Erhalten des Empfängersignals von der Mehrzahl von Empfängern 30, wobei das Empfängersignal auf der Streuung des zumindest einen akustischen Signals an den ein oder mehreren Objekten basiert. Das Verfahren umfasst ferner ein Detektieren der ein oder mehreren Objekte basierend auf dem Empfängersignal, wobei die Detektion der ein oder mehreren Objekte auf der Streuung des zumindest einen akustischen Signals an den ein oder mehreren Objekten basiert. Ausführungsbeispiele schaffen ferner ein Programm mit einem Programmcode zum Durchführen des Verfahrens, wenn der Programmcode auf einem Computer, einem Prozessor, einem Controller oder einer programmierbaren Hardwarekomponente ausgeführt wird.

In Ausführungsbeispielen kann das Verarbeitungsmodul 40 einem beliebigen Controller oder Prozessor oder einer programmierbaren Hardwarekomponente entsprechen. Beispielsweise kann das Verarbeitungsmodul 40 auch als Software realisiert sein, die für eine entsprechende Hardwarekomponente programmiert ist. Insofern kann das Verarbeitungsmodul 40 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Verarbeitungsmoduls 40 denkbar. Das Verarbeitungsmodul kann ferner eine Schnittstelle umfassen oder mit einer solchen gekoppelt sein, wobei die Schnittstelle einem oder mehreren Eingängen und/oder einem oder mehreren Ausgängen zum Empfangen und/oder Übertragen von Informationen entsprechen kann, etwa in digitalen Bitwerten, basierend auf einem Code, innerhalb eines Moduls, zwischen Modulen, oder zwischen Modulen verschiedener Entitäten.

In zumindest manchen Ausführungsbeispielen kann eine synthetische Apertur genutzt werden, d.h. entlang der ersten Ausdehnungsrichtung kann die Apertur durch das Aussenden mehrerer akustischer Signale künstlich vergrößert werden, sofern diese mehreren Signale ackumuliert zur Detektion der ein oder mehreren Objekte genutzt werden. So kann die (reale, räumliche) Apertur des Rasters in der zweiten Ausdehnungsrichtung zumindest 25% größer sein als die Apertur des Rasters in der ersten Ausdehnungsrichtung. Die effektive Apertur des Rasters in der ersten Ausdehnungsrichtung kann durch Nutzung einer synthetischen Apertur vergrößert werden. Dabei erlaubt es die synthetische Apertur eine potentiell geringere Ausdehnung des Rasters/Gitters/Arrays in Bewegungsrichtung durch die Verarbeitung der Daten zu kompensieren. So kann die Signalquelle 20 ausgebildet sein, um mehrere akustische Signale in einer vordefinierten zeitlichen Abfolge in Richtung des Meeresbodens auszusenden. Das Empfängersignal kann auf einer Streuung der mehreren akustischen Signale an den ein oder mehreren Objekten basieren. Das Verarbeitungsmodul 40 kann ausgebildet sein, um die ein oder mehreren Objekte basierend auf der Streuung der mehreren akustischen Signale an den ein oder mehreren Objekten zu detektieren.

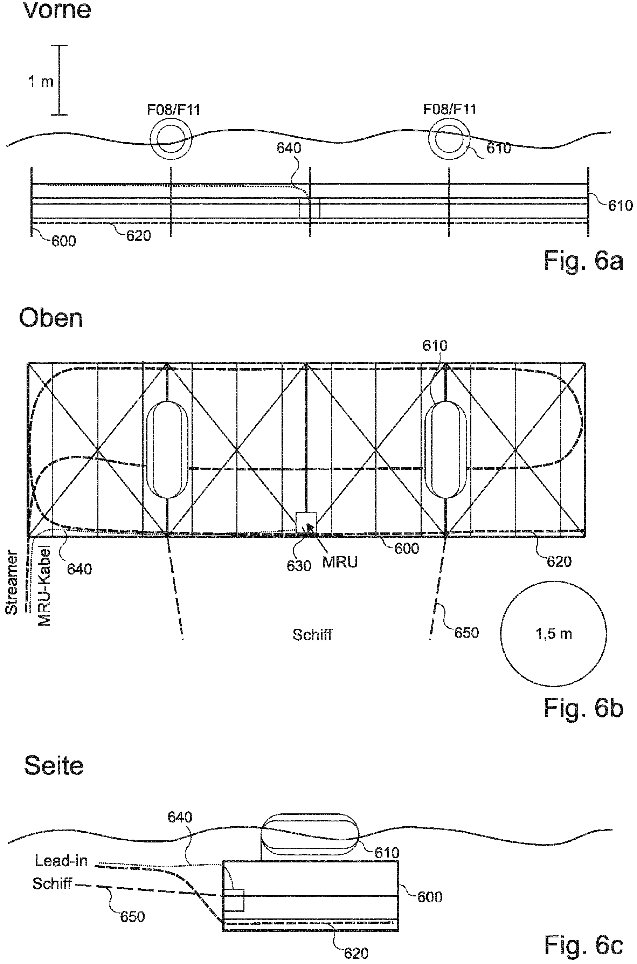

Es gibt verschiedene Möglichkeiten, die Mehrzahl von Empfängern durch die Befestigungsstruktur mit dem Schiff oder mit dem Antriebssystem zu koppeln. So kann etwa die Mehrzahl von Empfängern, etwa die mehrdimensionale Gitterstruktur, oder auch jede andere Anordnung von Empfängern an einem starren Rahmen der Befestigungsstruktur 10 angeordnet sein, wie es etwa in den Fign. 6a bis 6b gezeigt ist. Der starre Rahmen kann etwa aus Metall oder aus einem Verbundwerkstoff gefertigt sein.

In Fällen, in denen die Mehrzahl von Empfängern 30 in einer ersten Ausdehnungsrichtung (etwa der mehrdimensionalen Gitterstruktur) in einer Mehrzahl von logischen Spalten angeordnet sind, kann die mehrdimensionale Gitterstruktur etwa an einer starren Zugeinheit der Befestigungsstruktur befestigt sein, und die Mehrzahl von logischen Spalten als eine Mehrzahl von Ketten von Empfängern ausgebildet sein. Alternativ können die Mehrzahl von Ketten direkt an dem Schiff befestigt sein, oder mit der starren Zugeinheit an der Antriebseinheit.

Um die Abstände zwischen den Spalten zu halten können die Spalten gegeneinander stabilisiert sein. So können etwa die Empfänger einer logischen Reihe der Mehrzahl von logischen Reihen durch ein oder mehrere starre Querverbindungen miteinander (mechanisch) gekoppelt sein, die dazu ausgelegt sind, die Querabstände zwischen den logischen Spalten zu bewirken. Alternativ können die Querabstände auch durch andere Mittel bewirkt werden. So kann die Befestigungsstruktur 10, etwa die zweite Teilstruktur der Befestigungsstruktur, zumindest ein Scherbrett umfassen, beispielsweise zwei Scherbretter. Die Empfänger einer logischen Reihe der Mehrzahl von logischen Reihen können durch ein oder mehrere flexible Querverbindungen miteinander gekoppelt sein. Das zumindest eine Scherbrett kann im Zusammenspiel mit den flexiblen Querverbindungen dazu ausgelegt sein, um die Mehrzahl von Ketten von Empfängern in eine vordefinierte räumliche Ausdehnung zu spannen.

Zudem kann die Befestigungsstruktur ferner ein oder mehrere Bojen umfassen, die ausgebildet sind, um die Befestigungsstruktur zumindest teilweise über Wasser zu halten, so dass etwa die zumindest eine Signalquelle und die Mehrzahl von Empfängern sich im Einsatz unter Wasser befinden, die Befestigungsstruktur als solche jedoch im Wasser schwimmt und hinter dem Schiff (oder mit der Antriebseinheit) durch das Wasser bewegt werden kann.

Im Folgenden werden die Ausführungsbeispiele durch weitere Beispiele ergänzt. So können Merkmale, die im Zusammenhang mit den Figuren 1a und 1b beschrieben wurden, auf die Ausführungsbeispiele der folgenden Figuren übertragen werden, und umgekehrt. Die Ausführungsbeispiele, die im Zusammenhang mit den Figuren 1a und 1b beschrieben wurden, können dabei ein oder mehrere Merkmale umfassen, die im Folgenden beschrieben werden.

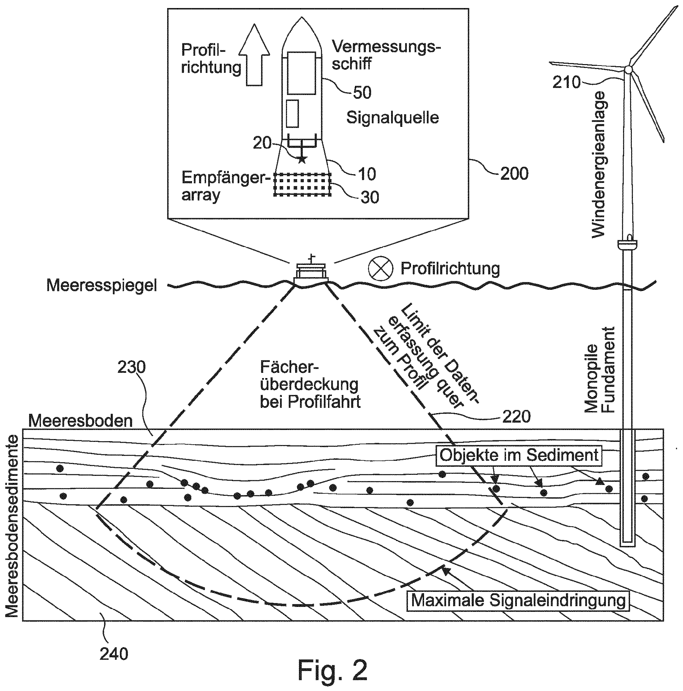

Zumindest manche Ausführungsbeispiele befassen sich mit einer entkoppelten Charakterisierung von Objekten im Untergrund. Um die Detektion und Lokalisierung von Objekten in marinen Sedimenten zu ermöglichen, kann der rückgestreute Anteil eines ausgesandten seismischen Signals (etwa des akustischen Signals) in genügender räumlicher und zeitlicher Auflösung aufgenommen werden (etwa durch die Mehrzahl von Empfängern, um das Empfängersignal zu generieren). Es kann dazu ein auf die Wellenlänge des ausgesandten seismischen Signals optimiertes Netz aus Empfängern (etwa die Mehrzahl von Empfängern) separat zu einer passend ausgewählten seismischen Quelle (etwa der Signalquelle) geschleppt werden (Fig. 2).

Die Wellenlänge des Quellsignals kann dazu an die angenommene Größe der zu detektierenden Objekte, d.h. der Punktstreuer, angepasst werden. Dazu stehen verschiedene akustische oder seismische Quellen als Signalquellen zur Verfügung, z.B. GI-Gun (Generator-Injector-Gun, Generator-Injektor-Kanone), Sparker (Schallquelle mit elektrischer Entladung), Boomer (Schallquelle, die die Energie in Kondensatoren speichert und über eine flache spiralförmige Spule abgibt, so dass Wasser durch eine benachbart angeordnete Kupferplatte verdrängt wird). Eine Verbesserung der Empfängeranordnung ermöglicht das Vermeiden von räumlichen Alias-Effekten, eine Verbesserung der Auflösung quer zum überfahrenen Profil und die Verbesserung der möglichen Signalverstärkung beim weiteren Processing.

Fig. 2 zeigt eine schematische Skizze eines Schleppsystems 200 mit Befestigungsstruktur 10, Signalquelle 20 und Empfängerarray 30 (etwa die Mehrzahl von Empfängern, die in einem Raster angeordnet ist, Array kann dabei etwa als Gitterstruktur übersetzt werden) zur Aufnahme gestreuter Energie von Objekten (z.B. Findlingen) in marinen Sedimenten 230; 240. Die Befestigungsstruktur ist mit der Signalquelle und dem Empfängerarray an einem Vermessungsschiff befestigt. Durch die große Quererstreckung des Arrays können gestreute Signale in einem Fächer 220 entlang des Profils aufgenommen und zur Objektdetektion ausgewertet werden. Der Fächer 220 zeigt dabei die maximale Signaleindringung des ausgesendeten akustischen Signals und die Begrenzung (auch engl. Limit) der Datenerfassung quer zum Profil. Windenergieanlage 210, die ein sog. Monopile-Fundament (Fundament, das auf einem einzigen Pfeiler basiert) aufweist, illustriert dabei, wie die Objekte im Sediment das Setzen des Fundaments erschweren können.

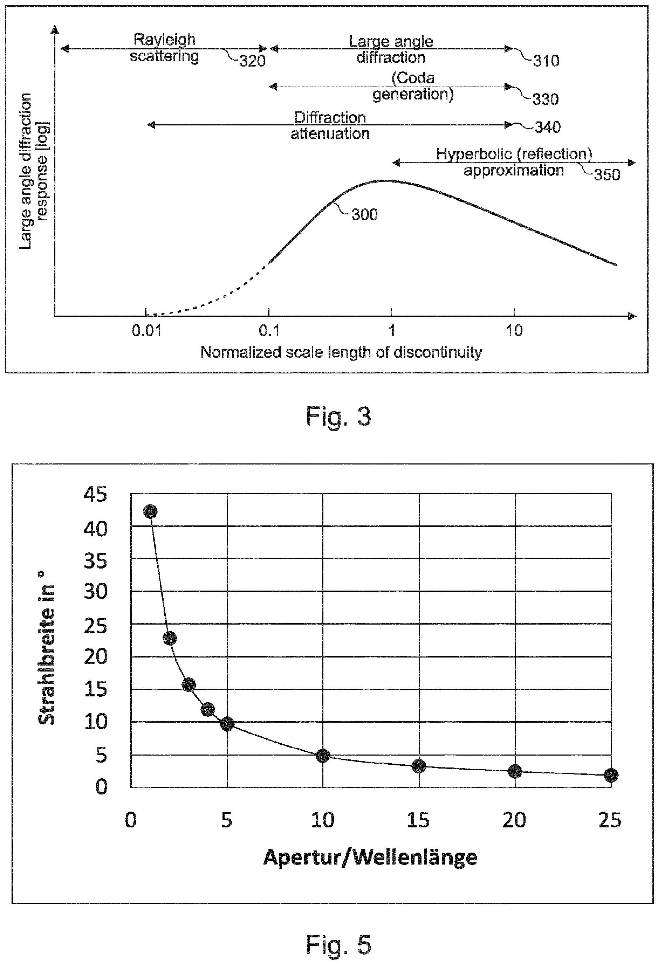

Eine starke Streuung eines seismischen/akustischen Signals ist zu erwarten, wenn die Wellenlänge des erzeugten, seismischen Quellsignals in derselben Größenordnung wie die Größe der streuenden Objekte ist. Daher kann das Verhältnis K/λ von Wellenlänge λ eines akustischen Signals und der Größe eines Körpers K im Bereich von 0.2 bis 2 liegen, um eine starke Weitwinkelstreuung zu erreichen (Englisch: Large angle diffraction; siehe Fig. 3), also etwa die Wellenlänge des akustischen Signals an die erwartete Größe der ein oder mehreren Objekte angepasst ist. Sind also beispielsweise Streuungsquellen (etwa die ein oder mehreren Objekte) im Größenbereich von 0.3 m bis 3 m im primären Interesse einer Untersuchung, kann die Wellenlänge beispielsweise 1.5 m betragen. Dies entspricht einer Frequenz von 1000 Hz unter der Annahme, dass die Ausbreitungsgeschwindigkeit etwa bei 1500 m/s liegt, was der Schallgeschwindigkeit im Wasser entspricht.

Fig. 3 zeigt ein Diffraktionsregime (310-350) und eine Stärke 300 einer Weitwinkelstreuung (Englisch: Large angle diffraction) abhängig von der normalisierten Längenskala eines streuendes Objektes, die dem Verhältnis A von Wellenlänge λ eines akustischen Signals und der Größe eines Körpers A entspricht. Dabei bezeichnet Bezugszeichen 310 die Weitwinkelstreuung, Bezugszeichen 320 eine Rayleighstreuung, Bezugszeichen 330 bezeichnet eine Entstehung von Coda-Wellen, Bezugszeichen 340 bezeichnet eine Streuungsdämpfung und Bezugszeichen 350 zeigt eine Annäherung der hyperbolischen Reflektion. Die x-Achse bezeichnet dabei eine normierte Skalenlänge der Diskontinuität, und die y-Achse zeigt die Weitwinkelstrahlungsreaktion (auf einer logarithmischen Skala).

Bei der Aufnahme seismischer Daten kann Aliasing im Raum auftreten wenn der Abstand der Empfänger größer als die Hälfte der Wellenlänge des zu empfangenden Signals ist. Eine aufgenommene Wellenfront kann dann möglicherweise nicht mehr präzise rekonstruiert werden und eine Lokalisierung z.B. eines Punktstreuers ist nicht möglich. Daher beinhaltet der hier gezeigte Lösungsweg, dass der Abstand der Empfänger in Profilrichtung sowie quer dazu geringer als die Hälfte der Wellenlänge sein kann. Die genaue Positionierung der Empfänger kann in vielen Fällen von großer Bedeutung sein und kann beispielsweise auf einer Rahmenkonstruktion realisiert werden. Zur genauen Positionierung kann ein GPS benutzt werden welches die Position und Ausrichtung des Empfängersystems (etwa der Mehrzahl von Empfängern) bestimmt. Um bei dem oben genannten Beispiel zu blieben, kann der Abstand zwischen zwei nebeneinanderliegenden Empfängern geringer als 0.75 m sein, um bei einer Frequenz von 1000 Hz und somit einer Wellenlänge von 1.5 m Streuungsquellen im Größenbereich von 0.3 m bis 3 m gut abbilden zu können.

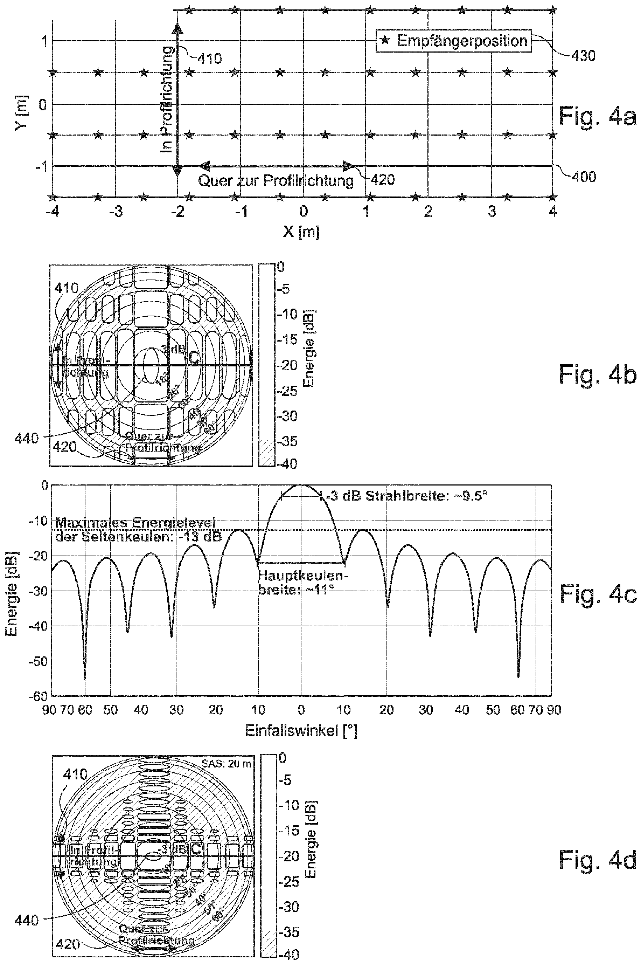

Fig. 4a zeigt eine Geometrie eines Schlepparrays 400 (etwa der Befestigungsstruktur, mit der Mehrzahl von Empfängern) nach einem Ausführungsbeispiel, ausgelegt für eine Quellfrequenz von -1000 Hz. Bezugszeichen 410 bezeichnet dabei die Ausdehnung in Profilrichtung (etwa in der ersten Ausdehnungsrichtung, etwa in Richtung der vorgesehenen Bewegung der Befestigungsstruktur), Bezugszeichen 420 bezeichnet die Ausdehnung Quer zur Profilrichtung (etwa in der zweiten Ausdehnungsrichtung, etwa orthogonal zur Richtung der vorgesehenen Bewegung der Befestigungsstruktur), und Bezugszeichen 430 bezeichnet die Empfängerpositionen.

Fig. 4b zeigt ein Beam Pattern (Strahlprofil) für das Array mit einer modellierten Wellenfront die frontal von unten auf das Array trifft. Die -3 dB Kontur 440 zeigt die charakteristische Strahlbreite des Systems. In Fig. 4b (und in Fig. 4d) ist der Einfallswinkel kreisförmig um die Mitte aufgetragen, wobei heller schattierte Bereiche eine höhere Energie (in dB) bezeichnen und dunklere Bereiche eine niedrigere Energie bezeichnen. Fig. 4c zeigt einen Schnitt durch das Beam Pattern quer zur Profilrichtung. Haupt- und Nebenkeulen sind deutlich zu erkennen. Dabei kann im vorliegenden Fall eine Strahlbreite bei -3 dB von -9,5°, eine Hauptkeulenbreite von ∼11° und ein maximales Energielevel der Seitenkeulen von -13 dB festgestellt werden. In Fig. 4c ist auf der x-Achse der Einfallswinkel (in Grad) und auf der y-Achse die Energie (in dB) aufgetragen. In Fig. 4d ist gezeigt wie durch eine künstliche Erweiterung des Arrays in Längsrichtung (Synthetic Aperture Array, Gitterstruktur mit einer synthetisch erzeugten Apertur) die Auflösung in dieser Richtung deutlich verbessert werden kann.

In Modellierstudien wurde gezeigt, dass die erreichbare laterale Auflösung quer zur Schlepprichtung des Systems direkt von der Erstreckung der Fläche abhängt, die von den Empfängern besetzt ist, d.h. der Apertur des Arrays quer zur Schlepprichtung. Die Auflösung in Querrichtung ist hier in manchen Fällen wichtiger als in Schlepprichtung, da entlang des aufgenommenen Profils die Auflösung durch z.B. eine Erhöhung der Schussrate der seismischen Quelle gesteigert werden kann. Die laterale Auflösung gibt hier beispielsweise den minimalen Abstand zwischen zwei Punktstreuern an, um diese beiden Objekte als separate Ereignisse registrieren zu können. Der sogenannte Beam Pattern` und damit wichtige Charakteristika eines Arrays wie die Strahlbreite können in zumindest einigen Ausführungsbeispielen errechnet werden, wenn die genauen Positionen der einzelnen Empfänger bekannt sind (Fig. 3). Die Strahlbreite gibt dabei die Auflösung eines Arrays als Winkeldifferenz zwischen zwei Streukörpern an. Generell gilt in zumindest einigen Ausführungsbeispielen, dass die Auflösung größer wird, je größer die Aperturbreite gehalten wird (Fig. 5).

Fig. 5 zeigt einen Zusammenhang der erreichbaren lateralen Auflösung (Strahlbreite, auf der y-Achse aufgetragen) in Abhängigkeit von der Größe des Empfängerarrays (als Apertur/Wellenlänge auf der x-Achse aufgetragen). Eine Apertur des Arrays etwa vom fünffachen der Wellenlänge zeigt in manchen Beispielen eine gute Kombination von genügender Auflösung und praktikabler Arraygröße für den Einsatz von Messschiffen.

Durch die spätere Verarbeitung der aufgenommenen Daten kann die Auflösung über die Strahlbreite hinaus verbessert werden. Daher wird in manchen Ausführungsbeispielen angestrebt, die Apertur des Arrays größer oder gleich der fünffachen Wellenlänge zu halten, womit Strahlbreiten <10° erreicht werden können (siehe Fig. 5). Kleinere Arrays sind ebenso möglich, allerdings kann dann die Auflösung unter dieser Verringerung leiden. Um die Auflösung des Arrays in Profilrichtung zu erhöhen, können mehrere aufeinanderfolgende Schüsse der Quelle zu einem zusammen bearbeitet werden. Dadurch kann die Apertur des Arrays in Profilrichtung künstlich vergrößert (,Synthetic Aperture Array') und damit die Auflösung der Daten in dieser Richtung erhöht (siehe etwa auch Fig. 4d) werden. Bei dem oben erläuterten Beispiel kann der Empfängerarray somit mindestens 7.5 m breit sein (5 x 1.5 m Wellenlänge des Quellsignals). Die Längserstreckung des Arrays kann hierbei verkleinert werden, allerdings ist es sinnvoll möglichst viele Aufnahmeeinheiten einzubeziehen um die Statistik der Aufnahme zu verbessern. In Hinblick auf eine gute Handhabbarkeit im praktischen Einsatz kann eine Längsapertur von 2.5 bis 3 m als sinnvoll erachtet werden. Typischerweise entspricht die Schiffsgeschwindigkeit während derartiger Untersuchungen 3-5 kn, was in etwa 1.5-2.6 m/s entspricht. Um die künstliche Apertur in Längsrichtung der Apertur in Querrichtung anzugleichen können demnach alle Schüsse in einem Zeitfenster von etwa 3-5 s zu einem synthetischen Array zusammengefasst werden.

Wie gezeigt ist die Anordnung der Empfänger, d.h. die Entfernung der Empfänger zueinander, im Array ein wichtiger Einflussfaktor für eine verbesserte Aufnahme von gestreuter Energie und den Erfolg der Detektion gestreuter Energie in den Aufnahmen. Dies ist in vielen Fällen ein wichtiger Faktor, da Streuungen im Vergleich zu Reflektionen sehr schwach sind und daher leicht im Rauschen untergehen können. Die genaue Anordnung der Empfänger im Array (z.B. rechtwinklig gleichmäßig, spiralförmig oder zufällig verteilt) beeinflusst auch zu einem geringen Teil die erreichbare Auflösung der Messung. Die beste Auflösung kann in zumindest manchen Ausführungsbeispielen mit einem regelmäßigen Gitter von Empfängern erreicht werden (vgl. Fign. 2 und 3), während die beste Signalverstärkung mit Anordnungen erreicht werden kann in denen sich kein Abstand der Empfänger zum Zentrum des Arrays wiederholt. Letztgenannte Anordnungen können zum Beispiel durch spiralförmige oder per Zufallsprinzip verteilte und verbesserte Empfängeranordnungen erreicht werden.

Ausführungsbeispiele umfassen dabei eine Befestigungsstruktur, die genutzt wird, um die Empfänger und die Signalquelle am Schiff zu befestigen, so dass diese von dem Schiff gezogen werden können. Besonderes Augenmerk kann dabei darauf gelegt werden, wie die Empfänger der Mehrzahl von Empfängern (etwa das Empfängerarray) befestigt werden. In der konkreten Ausführung sind viele Möglichkeiten denkbar:

Starrer Rahmen: Manche Ausführungsbeispiele basieren auf einem festen, schwimmfähigen Rahmen, wie er etwa in den Fign. 6a bis 6c dargestellt ist. Da eine Quellfrequenz von -1000 Hz verwendet wurde, konnten oben geschilderte Beispielmaße verwendet werden. Der gezeigte Rahmen 610 (etwa die zweite Teilstruktur der Befestigungseinheit) ist 8 m breit und 2,5 m lang, und hat eine Höhe von etwa 1 m. Eine Motion Reference Unit 630 (MRU, Bewegungs-Referenzeinheit, ein Bewegungssensor) wurde im Rahmen verbaut, um die Bewegungen des Rahmens zu überwachen und gegebenenfalls die Zeitversätze zu korrigieren, die durch diese Bewegungen entstehen. Die Empfängereinheiten (etwa die Mehrzahl von Empfängern) wurden an dem Rahmen befestigt und genau eingemessen. Der Rahmen erlaubt zusätzlich eine genaue Tiefenkontrolle der Empfänger. Eine genaue Positionierung des Rahmens kann durch ein GPS erreicht werden, ebenso wie bei anderen Ausführungen (siehe unten). Weiterhin kann mit einem hochfrequenten akustischen Signal welches durch die Empfänger aufgenommen wird über eine Triangulation die Position der einzelnen Empfänger rekonstruiert werden. Auf dem Rahmen 610 ist eine Empfängerkette 620 (ein sog. Streamer) in Schleifen angebracht (die die Mehrzahl von Empfängern umfassen kann) um das Empfängernetz in der erforderlichen Apertur aufzuspannen, und ein MRU-Kabel 640, das die MRU 630 mit dem Schiff verbindet. Bezugszeichen 610 bezeichnet Bojen, die ausgebildet sind, um den Rahmen in einer vordefinierten Wassertiefe zu halten.

Starre Zugeinheit: Alternativ zu oben geschilderter Konstruktion könnte auch nur eine feste Zugeinheit verwendet werden. Hierbei können die Empfängerketten in der gewählten Konfiguration an einer starren Querverbindung in bestimmten Abständen befestigt werden. Diese Querverbindung kann dann vom Schiff geschleppt werden. Die Empfängerketten können hinter der Schleppvorrichtung frei im Wasser hängen, die wichtigen Querabstände können durch eine starre Schleppverbindung gewährleistet werden. Die Schleppeinheit dann dabei so breit wie die angestrebte Quererstreckung des Array sein.

Scherbretter: Um starre Einheiten zu vermeiden kann die Quererstreckung auch durch Scherbretter erreicht werden. Diese Realisierung hat in manchen Ausführungsbeispielen den Nachteil, dass sich die Positionierung schwieriger gestaltet. Durch ein Schleppen der einzelnen Empfängerketten mit ausreichend kleinen Querabständen kann ein nutzbares Empfängernetz geschaffen werden.

Breites Schiff: Wenn die Schiffsbreite es zulässt oder diese durch Ausleger oder Kräne vergrößert werden kann, können die Empfängerketten (über die Befestigungsstruktur) auch direkt vom Schiff ausgebracht werden. Als Nachteil kann hier in manchen Ausführungsbeispielen die Gefahr des Überkreuzens der einzelnen Empfängerketten durch die kleinen Querabstände gesehen werden. Weiterhin ist das gleichzeitige Schleppen einer akustischen/seismischen Quelle erschwert.

Synthetische Quer- und Längserstreckung: Eine sehr enge Profildichte von 2D oder 3D seismischen Daten mit einer oder wenigen Empfängerketten im Untersuchungsgebiet kann es ermöglichen die Längs- und Quererstreckung des Arrays synthetisch aus mehreren Überfahrten zu errechnen. Diese Art der Datenerfassung ist möglicherweise aufwändig und anfällig für Fehler in der Datenakquise.

Durch die beschriebene Methode wird das gestreute Wellenfeld ohne räumliches Aliasing auch quer zur Profilrichtung aufgezeichnet. Diese genaue Aufzeichnung der gestreuten Energie im Raum ist mit manchen anderen Akquisitionsgeometrien nicht möglich. Von anderen Systemen hebt sich das beschriebene System beispielsweise u.a. durch seine unabhängig geschleppte und anpassbare Signalquelle ab. Die beschriebene Aufnahmegeometrie ermöglicht in vielen Ausführungsbeispielen die Rekonstruktion von Streuobjekten im Untergrund innerhalb eines bestimmten Sedimentvolumens entlang des gemessenen Profils. Die Größe des abgebildeten Datenvolumens kann dabei abhängig von u.a. Wassertiefe, Arraygröße und eingesetzter Signalquelle sein.

Es können Streuobjekte verschiedenster Größen in unterschiedlichen Tiefen lokalisiert werden, da die Akquisitionsgeometrie mit der Arraygröße und der Signalquelle an die erwarteten Größen und Lagerungstiefen angepasst werden kann. Andere Systeme können durch die vertikale und horizontale Auflösung limitiert sein (z.B. Reflektionsseismik) oder die Ergebnisse können mehrdeutig sein (z.B. UXO Detektion durch Magnetik). Hier bietet die beschriebene Methodik einen klaren Vorteil mit einem spezialisierten Ansatz zur Obj ektdetektion mit Hilfe gestreuter akustischer Energie.

Durch die genaue Aufnahme des Wellenfeldes mit einem Array von großer Apertur quer zur Profilrichtung können Streuobjekte bis zu einer gewissen Distanz abseits des Profils detektiert und lokalisiert werden. Diese Lokalisierung von Objekten im Sediment querab zur Profilrichtung ist mit anderen Methoden möglicherweise nicht möglich, da für diesen ein direktes Überfahren des Objektes zur genauen Lokalisierung nötig sein kann. Dadurch kann mit der beschriebenen Methode ein definiertes Messgebiet effizienter vermessen werden, außerdem können Ungenauigkeiten in der Objektlokalisierung durch zu große Profilabstände bei der 2D Datenakquise vermieden werden.

Mit dem beschriebenen System kann neben der gestreuten Energie auch das reflektierte Wellenfeld hochgenau aufgenommen werden und so ein hochauflösender Datensatz in einem Streifen direkt unterhalb des geschleppten Empfängernetzes abgebildet werden. Die hochgenaue Positionierung der einzelnen Empfänger ermöglicht hier eine sehr genaue Abbildung des Untergrundes. Dieser sekundäre Datensatz kann parallel zu der gestreuten Energie aufgenommen und genutzt werden.

Marine seismische 3D Untersuchungen sind in der Offshore Surveyindustrie (Vermessungsindustrie) sehr etabliert, vor allem im Rahmen von Öl- und Gasexploration. Der hier dargestellte Lösungsansatz stellt eine Verbesserung eines 3D Akquisitionssystems dar. Die Besonderheit ist zumindest der geringe Querabstand der Empfänger, der für die Aufnahme gestreuter Energie ohne Aliasing genutzt werden kann. Streuungsenergie ist in nahezu jedem seismischen Datensatz vorhanden, wird aber im Allgemeinen nicht beachtet oder sogar aktiv herausgefiltert. Streuungsenergie kann somit auch mit anderen nicht-optimierten Akquisitionssystemen aufgenommen werden, die Auswertung wird allerdings nicht wie mit der hier beschriebenen Methode möglich sein.

Zumindest manche Ausführungsbeispiele befassen sich mit der Detektion, Lokalisierung und Charakterisierung von Objekten in Meeresbodensedimenten. Die Methode kann an unterschiedliche Objektgrößen und Lagerungstiefen angepasst werden. Objekte die lokalisiert werden können sind etwa Findlinge, Gesteinsblöcken, Konkretionen und Inhomogenitäten die in Sedimenten enthalten sein können. Vor allem Findlinge stellen ein Risiko für die Konstruktion von mariner Infrastruktur dar, z.B. Windenergieanlagen, Plattformen oder Pipelines dar.

Die Installation der Fundamente, z.B. durch Einschlagen eines Monopiles mehrere 10er Meter in den Meeresboden, kann durch das Auftreffen auf einen Findling verhindert oder verzögert werden und es kann zu Schäden am Material kommen. Eine Kartierung von Findlingen direkt am Meeresboden wird mit anderen Systemen standardmäßig vorgenommen (z.B. Multibeam oder Sidescan Sonare, Sonare mit mehreren Strahlen oder Seitensicht-Sonar), jedoch kann eine Kartierung von Findlingen im Sediment mit manchen anderen Systemen nicht zuverlässig und effizient durchgeführt werden.

Eine weitere Art von zu lokalisierenden Objekten ist nicht-detonierte Munition (UneXploded Ordnance: UXO) im Sediment. Diese Objekte stellen eine große Gefahr für marine Bauprojekte vor allem in Nord- und Ostsee dar. Häufig werden UXOs mit magnetischen Methoden identifiziert und müssen anschließend aufwändig identifiziert und beseitigt werden. UXOs können bis zu mehrere Meter im Sediment eingespült sein und sind mit Meeresbodenkartierungen (Multibeam/Sidescan Sonar) teilweise nicht zu lokalisieren. Weiterhin kommt es bei magnetischen Messungen oft zu Datenartefakten die zu einer fälschlich positiven Identifizierung von UXOs führt. Dies zieht eine aufwändige Validierung durch Taucher/ROVs (Remotely Operated underwater Vehicle, Ferngesteuertes Unterwasserfahrzeug) nach sich. Zumindest manche Ausführungsbeispiele stellen eine effiziente Möglichkeit zur Absicherung der magnetischen Messungen dar. Objekte können im Untergrund lokalisiert werden und mit den gemessenen magnetischen Anomalien abgeglichen werden zur verbesserten Identifizierung von tatsächlich vorhandenen UXOs. Weiterhin kann das beschriebene System in der (geo-)wissenschaftlichen oder angewandten Forschung an z.B. kalten und heißen Quellen, Störungsflächen, Migrationswegen von Fluiden oder glazialen Prozessen eingesetzt werden.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Beispiele können weiterhin ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Funktionen verschiedener in den Figuren gezeigter Elemente einschließlich jeder als "Mittel", "Mittel zum Bereitstellen eines Signals", "Mittel zum Erzeugen eines Signals", etc. bezeichneter Funktionsblöcke kann in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungsspezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

## Patentansprüche

1. System (100; 200) zum Detektieren von ein oder mehreren Objekten im Meeresboden, das System umfassend:
eine Befestigungsstruktur (10), wobei die Befestigungsstruktur dafür vorgesehen ist, eine Signalquelle (20) und eine Mehrzahl von Empfängern (30) mechanisch mit einem Schiff oder mit einer Antriebseinheit zu koppeln;
die Signalquelle (20), die mechanisch mit der Befestigungsstruktur gekoppelt ist, und ausgebildet ist zum Aussenden zumindest eines akustischen Signals in Richtung des Meeresbodens, wobei eine Wellenlänge des akustischen Signals an eine erwartete Größe der ein oder mehreren Objekte angepasst ist, so dass die Wellenlänge des akustischen Signals zumindest 10% der erwarteten Größe und höchstens 1000% der erwarteten Größe der ein oder mehreren Objekte entspricht;
die Mehrzahl von Empfängern (30), die mechanisch mit der Befestigungsstruktur gekoppelt sind, wobei ein Abstand zwischen benachbarten Empfängern höchstens so groß ist wie die Hälfte der Wellenlänge des akustischen Signals,
wobei die Mehrzahl von Empfängern ausgebildet ist, basierend auf einer Streuung des zumindest einen akustischen Signals an den ein oder mehreren Objekten ein Empfängersignal zu generieren; und
ein Verarbeitungsmodul (40), ausgebildet zum Detektieren der ein oder mehreren Objekte basierend auf dem Empfängersignal, wobei die Detektion der ein oder mehreren Objekte auf der Streuung des zumindest einen akustischen Signals an den ein oder mehreren Objekten basiert.

2. Das System gemäß Anspruch 1, wobei die Empfänger der Mehrzahl von Empfängern (30) in einem regelmäßigen oder unregelmäßigen Raster angeordnet sind, wobei das Verarbeitungsmodul ausgebildet ist, basierend auf der Streuung des akustischen Signals an den ein oder mehreren Objekten die ein oder mehreren Objekte sowohl direkt unterhalb des Rasters als auch seitlich versetzt zu dem Raster zu detektieren.

3. Das System gemäß einem der Ansprüche 1 oder 2, wobei die Empfänger der Mehrzahl von Empfängern (30) in einem regelmäßigen oder unregelmäßigen Raster angeordnet sind, wobei das Raster eine erste Ausdehnungsrichtung und eine zweite Ausdehnungsrichtung aufweist, wobei die erste Ausdehnungsrichtung entlang einer vorgesehenen Bewegungsrichtung der Befestigungsstruktur definiert ist, und wobei die zweite Ausdehnungsrichtung orthogonal zu der vorgesehenen Bewegungsrichtung der Befestigungsstruktur (10) definiert ist.

4. Das System gemäß Anspruch 4, wobei die zumindest eine Signalquelle (20) in einer Verlängerung der ersten oder der zweiten Ausdehnungsrichtung relativ zu der Mehrzahl von Empfängern angeordnet ist,
oder wobei die zumindest eine Signalquelle (20) innerhalb des Rasters, in dem die Empfänger der Mehrzahl von Empfängern angeordnet sind, angeordnet ist,

5. Das System gemäß einem der Ansprüche 3 oder 4, wobei eine Apertur des Rasters in der zweiten Ausdehnungsrichtung zumindest 25% größer ist als eine Apertur des Rasters in der ersten Ausdehnungsrichtung, wobei die Signalquelle (20) ausgebildet ist, um mehrere akustische Signale in einer vordefinierten zeitlichen Abfolge in Richtung des Meeresbodens auszusenden, wobei das Empfängersignal auf einer Streuung der mehreren akustischen Signale an den ein oder mehreren Objekten basiert, wobei das Verarbeitungsmodul (40) ausgebildet ist, um die ein oder mehreren Objekte basierend auf der Streuung der mehreren akustischen Signale an den ein oder mehreren Objekten zu detektieren.

6. Das System gemäß einem der Ansprüche 3 bis 5, wobei eine Ausdehnung des Rasters in der zweiten Ausdehnungsrichtung zumindest ein zweifaches einer Wellenlänge des akustischen Signals beträgt.

7. Das System gemäß einem der Ansprüche 1 bis 6, wobei die Mehrzahl von Empfängern (30) in einer mehrdimensionalen Gitterstruktur angeordnet ist.

8. Das System gemäß Anspruch 7, wobei die mehrdimensionale Gitterstruktur an einem starren Rahmen der Befestigungsstruktur (10) angeordnet ist.

9. Das System gemäß einem der Ansprüche 7 oder 8, wobei die Mehrzahl von Empfängern (30) in der ersten Ausdehnungsrichtung der mehrdimensionalen Gitterstruktur in einer Mehrzahl von logischen Spalten angeordnet sind, und wobei die Mehrzahl von Empfängern in der zweiten Ausdehnungsrichtung der mehrdimensionalen Gitterstruktur in einer Mehrzahl von logischen Zeilen angeordnet sind,
wobei die mehrdimensionale Gitterstruktur an einer starren Zugeinheit der Befestigungsstruktur befestigt ist, wobei die Mehrzahl von logischen Spalten als eine Mehrzahl von Ketten von Empfängern ausgebildet ist.

10. Das System gemäß Anspruch 9, wobei die Empfänger einer logischen Zeile der Mehrzahl von logischen Zeilen durch ein oder mehrere starre Querverbindungen miteinander gekoppelt sind.

11. Das System gemäß Anspruch 9, wobei die Befestigungsstruktur (10) zumindest ein Scherbrett umfasst, wobei die Empfänger einer logischen Reihe der Mehrzahl von logischen Reihen durch ein oder mehrere flexible Querverbindungen miteinander gekoppelt sind, und wobei das zumindest eine Scherbrett im Zusammenspiel mit den flexiblen Querverbindungen dazu ausgelegt ist, die Mehrzahl von Ketten von Empfängern in eine vordefinierte räumliche Ausdehnung zu spannen.

12. Das System gemäß einem der Ansprüche 1 bis 11, wobei das Empfängersignal einen ersten Signalanteil umfasst, der auf der Streuung des zumindest einen akustischen Signals an den ein oder mehreren Objekten basiert, und wobei das Empfängersignal einen zweiten Signalanteil umfasst, der auf einer Reflektion des zumindest einen akustischen Signals basiert, wobei das Verarbeitungsmodul (40) ausgebildet ist, um den ersten Signalanteil von dem zweiten Signalanteil zu trennen, und um basierend auf dem ersten Signalanteil die ein oder mehreren Objekte zu detektieren.

13. Das System gemäß einem der Ansprüche 1 bis 12, umfassend zumindest eine weitere Signalquelle, ausgebildet zum Aussenden zumindest eines weiteren akustischen Signals in Richtung des Meeresbodens, wobei eine Wellenlänge des weiteren akustischen Signals zumindest 10% kleiner oder größer ist als die Wellenlänge des akustischen Signals, und wobei die weitere Signalquelle ausgebildet ist, um das weitere akustische Signal zeitversetzt zu dem akustischen Signal auszusenden.

14. Ein Verarbeitungsmodul (40) zum Detektieren von ein oder mehreren Objekten im Meeresboden, wobei das Verarbeitungsmodul (40) ausgebildet ist zum:
Erhalten einer Information über zumindest ein akustisches Signal einer akustischen Signalquelle (20), wobei eine Wellenlänge des akustischen Signals an eine erwartete Größe der ein oder mehreren Objekte angepasst ist, so dass die Wellenlänge des akustischen Signals zumindest 10% der erwarteten Größe und höchstens 1000% der erwarteten Größe der ein oder mehreren Objekte entspricht;
Erhalten eines Empfängersignals von einer Mehrzahl von Empfängern (30), wobei das Empfängersignal auf einer Streuung des zumindest einen akustischen Signals an den ein oder mehreren Objekten basiert;
Detektieren der ein oder mehreren Objekte basierend auf dem Empfängersignal, wobei die Detektion der ein oder mehreren Objekte auf der Streuung des zumindest einen akustischen Signals an den ein oder mehreren Objekten basiert.

15. Verfahren zum Detektieren von ein oder mehreren Objekten im Meeresboden, wobei das Verfahren umfasst:
Aussenden (110) eines akustischen Signals durch eine akustische Signalquelle, wobei eine Wellenlänge des akustischen Signals an eine erwartete Größe der ein oder mehreren Objekte angepasst ist, so dass die Wellenlänge des akustischen Signals zumindest 10% der erwarteten Größe und höchstens 1000% der erwarteten Größe der ein oder mehreren Objekte entspricht;
Generieren (120) eines Empfängersignals durch eine Mehrzahl von Empfängern, wobei ein Abstand zwischen benachbarten Empfängern höchstens so groß ist wie die Hälfte der Wellenlänge des akustischen Signals, wobei das Empfängersignal auf einer Streuung des zumindest einen akustischen Signals an den ein oder mehreren Objekten basiert;
Detektieren (130) der ein oder mehreren Objekte basierend auf dem Empfängersignal, wobei die Detektion der ein oder mehreren Objekte auf der Streuung des zumindest einen akustischen Signals an den ein oder mehreren Objekten basiert.

## Claims

1. A system (100; 200) for detecting one or more objects in the seabed, the system comprising:
a mounting structure (10), wherein the mounting structure is intended for mechanically coupling a signal source (20) and a plurality of receivers (30) to a vessel or to a propulsion unit;
the signal source (20) mechanically coupled to the mounting structure and configured to emit at least one acoustic signal towards the seabed, wherein a wavelength of the acoustic signal is adapted to an expected size of the one or more objects, such that the wavelength of the acoustic signal corresponds to at least 10% of the expected size and at most 1000% of the expected size of the one or more objects;
the plurality of receivers (30) mechanically coupled to the mounting structure, wherein a distance between adjacent receivers is at most as large as half the wavelength of the acoustic signal,
wherein the plurality of receivers is configured to generate a receiver signal based on a scattering of the at least one acoustic signals at the one or more objects; and
a processing module (40) configured to detect the one or more objects based on the receiver signal, wherein the detection of the one or more objects is based on the scattering of the at least one acoustic signal at the one or more objects.

2. The system of claim 1, wherein the receivers of the plurality of receivers (30) are arranged in a regular or irregular grid, wherein the processing module is configured to detect the one or more objects both directly below the grid and laterally offset from the grid based on the scattering of the acoustic signal at the one or more objects.

3. The system of any one of claims 1 or 2, wherein the receivers of the plurality of receivers (30) are arranged in a regular or irregular grid, wherein the grid comprises a first direction of extension and a second direction of extension, wherein the first direction of extension is defined along an intended direction of movement of the mounting structure, and wherein the second direction of extension is defined orthogonal to the intended direction of movement of the mounting structure (10).

4. The system of claim 4, wherein the at least one signal source (20) is arranged in an extension of the first or the second direction of extension relative to the plurality of receivers,
or wherein the at least one signal source (20) is arranged within the grid in which the receivers of the plurality of receivers are arranged,

5. The system of any one of claims 3 or 4, wherein an aperture of the grid in the second direction of extension is at least 25% larger than an aperture of the grid in the first direction of extension, wherein the signal source (20) is configured to emit a plurality of acoustic signals in a predefined temporal sequence towards the seabed, wherein the receiver signal is based on a scattering of the plurality of acoustic signals at the one or more objects, wherein the processing module (40) is configured to detect the one or more objects based on the scattering of the plurality of acoustic signals at the one or more objects.

6. The system of any one of claims 3 to 5, wherein an extension of the grid in the second direction of extension is at least twice a wavelength of the acoustic signal.

7. The system of any one of claims 1 to 6, wherein the plurality of receivers (30) is arranged in a multidimensional lattice structure.

8. The system of claim 7, wherein the multidimensional lattice structure is arranged on a rigid frame of the mounting structure (10).

9. The system of any one of claims 7 or 8, wherein the plurality of receivers (30) is arranged in the first direction of extension of the multidimensional lattice structure in a plurality of logical columns, and wherein the plurality of receivers is arranged in the second direction of extension of the multidimensional lattice structure in a plurality of logical rows,
wherein the multidimensional lattice structure is mounted to a rigid tensile unit of the mounting structure, the plurality of logic columns being configured as a plurality of chains of receivers.

10. The system of claim 9, wherein the receivers of one logical row of the plurality of logical rows are coupled together by one or more rigid cross-connections.

11. The system of claim 9, wherein the mounting structure (10) comprises at least one shear board, wherein the receivers of one logical series of the plurality of logical series are coupled together by one or more flexible cross-connections, and wherein the at least one shear board is configured, in interaction with the flexible cross-connections, to span the plurality of chains of receivers into a predefined spatial extension.

12. The system of any one of claims 1 to 11, wherein the receiver signal comprises a first signal portion based on the scattering of the at least one acoustic signal at the one or more objects, and wherein the receiver signal comprises a second signal portion based on a reflection of the at least one acoustic signal, wherein the processing module (40) is configured to separate the first signal portion from the second signal portion, and to detect the one or more objects based on the first signal portion.

13. The system of any one of claims 1 to 12, comprising at least one further signal source configured to emit at least one further acoustic signal towards the seabed, wherein a wavelength of the further acoustic signal is at least 10% smaller or larger than the wavelength of the acoustic signal, and wherein the further signal source is configured to emit the further acoustic signal with a time delay to the acoustic signal.

14. A processing module (40) for detecting one or more objects in the seabed, the processing module (40) being configured to:
obtain a piece of information about at least one acoustic signal of an acoustic signal source (20), wherein a wavelength of the acoustic signal is adapted to an expected size of the one or more objects, such that the wavelength of the acoustic signal corresponds to at least 10% of the expected size and at most 1000% of the expected size of the one or more objects;
obtain a receiver signal from a plurality of receivers (30), wherein the receiver signal is based on a scattering of the at least one acoustic signal at the one or more objects;
detect the one or more objects based on the receiver signal, wherein the detection of the one or more objects is based on the scattering of the at least one acoustic signal at the one or more objects.

15. A method of detecting one or more objects in the seabed, wherein the method comprises:
emitting (110) an acoustic signal by an acoustic signal source, wherein a wavelength of the acoustic signal is adapted to an expected size of the one or more objects, such that the wavelength of the acoustic signal corresponds to at least 10% of the expected size and at most 1000% of the expected size of the one or more objects;
generating (120) a receiver signal by a plurality of receivers, wherein a distance between adjacent receivers is at most as large as half the wavelength of the acoustic signal, wherein the receiver signal is based on a scattering of the at least one acoustic signal at the one or more objects;
detecting (130) the one or more objects based on the receiver signal, wherein the detection of the one or more objects is based on the scattering of the at least one acoustic signal at the one or more obj ects.

## Revendications

1. Système (100 ; 200) pour détecter un ou plusieurs objets dans le fond marin, le système comprenant :
une structure de fixation (10), la structure de fixation étant prévue pour coupler mécaniquement une source de signal (20) et une pluralité de récepteurs (30) à un navire ou à une unité de propulsion ;
la source de signal (20) couplée mécaniquement à la structure de fixation et configurée pour émettre au moins un signal acoustique en direction du fond marin, une longueur d'onde du signal acoustique étant adaptée à une taille attendue du ou des objets, de sorte que la longueur d'onde du signal acoustique correspond à au moins 10% de la taille attendue et à au plus 1000% de la taille attendue du ou des objets ;
la pluralité de récepteurs (30) couplés mécaniquement à la structure de fixation, dans lequel une distance entre des récepteurs adjacents est au plus égale à la moitié de la longueur d'onde du signal acoustique,
dans lequel la pluralité de récepteurs est configuré pour générer un signal de récepteur sur la base d'une diffusion dudit au moins un signal acoustique au niveau du ou des objet ; et
un module de traitement (40) configuré pour détecter le ou les objets sur la base du signal de récepteur, la détection du ou des objets étant basée sur la diffusion dudit au moins un signal acoustique au niveau du ou des objets.

2. Système selon la revendication 1, dans lequel les récepteurs de la pluralité de récepteurs (30) sont disposés selon une grille régulière ou irrégulière, le module de traitement étant configuré pour détecter, sur la base de la diffusion du signal acoustique au niveau du ou des objets, le ou les objets à la fois directement en dessous de la grille et décalés latéralement par rapport à la grille.

3. Système selon l'une des revendications 1 ou 2, dans lequel les récepteurs de la pluralité de récepteurs (30) sont disposés selon une grille régulière ou irrégulière, la grille ayant une première direction d'extension et une deuxième direction d'extension, la première direction d'extension étant définie le long d'une direction de déplacement prévue de la structure de fixation, et la deuxième direction d'extension étant définie orthogonale à la direction de déplacement prévue de la structure de fixation (10).

4. Système selon la revendication 4, dans lequel ladite au moins une source de signal (20) est disposée dans un prolongement de la première ou de la deuxième direction d'extension par rapport à la pluralité de récepteurs,
ou dans lequel ladite au moins une source de signal (20) est disposée à l'intérieur de la grille dans laquelle les récepteurs de la pluralité de récepteurs sont disposés,

5. Système selon l'une des revendications 3 ou 4, dans lequel une aperture de la grille dans la deuxième direction d'extension est au moins 25% plus grande qu'une aperture de la grille dans la première direction d'extension, dans lequel la source de signal (20) est configurée pour émettre une pluralité de signaux acoustiques dans une séquence temporelle prédéfinie en direction du fond marin, le signal de récepteur étant basé sur une dispersion de la pluralité de signaux acoustiques au niveau du ou des objets, le module de traitement (40) étant configuré pour détecter le ou les objets sur la base de la dispersion de la pluralité de signaux acoustiques au niveau du ou des objets.

6. Système selon l'une des revendications 3 à 5, dans lequel une extension de la grille dans la deuxième direction d'extension est au moins égale à deux fois une longueur d'onde du signal acoustique.

7. Système selon l'une des revendications 1 à 6, dans lequel la pluralité de récepteurs (30) est disposée dans une structure réticulaire multidimensionnelle.

8. Système selon la revendication 7, dans lequel la structure réticulaire multidimensionnelle est disposée sur un cadre rigide de la structure de fixation (10).

9. Système selon l'une des revendications 7 ou 8, dans lequel la pluralité de récepteurs (30) sont disposés dans la première direction d'extension de la structure réticulaire multidimensionnelle en une pluralité de colonnes logiques, et dans lequel la pluralité de récepteurs sont disposés dans la deuxième direction d'extension de la structure réticulaire multidimensionnelle en une pluralité de lignes logiques,
dans lequel la structure réticulaire multidimensionnelle est fixée à une unité de traction rigide de la structure de fixation, dans lequel la pluralité de colonnes logiques est configurée comme une pluralité de chaînes de récepteurs.

10. Système selon la revendication 9, dans lequel les récepteurs d'une ligne logique de la pluralité de lignes logiques sont couplés les uns aux autres par une ou plusieurs liaisons transversales rigides.

11. Système selon la revendication 9, dans lequel la structure de fixation (10) comprend au moins une planche de cisaillement, dans lequel les récepteurs d'une série logique de la pluralité de séries logiques sont couplés les uns aux autres par une ou plusieurs liaisons transversales flexibles, et dans lequel ladite au moins une planche de cisaillement, en coopération avec les liaisons transversales flexibles, est configurée pour tendre la pluralité de chaînes de récepteurs dans une extension spatiale prédéfinie.

12. Système selon l'une des revendications 1 à 11, dans lequel le signal de récepteur comprend une première partie de signal basée sur la diffusion dudit au moins un signal acoustique au niveau du ou des objets, et dans lequel le signal de récepteur comprend une deuxième partie de signal basée sur une réflexion dudit au moins un signal acoustique, le module de traitement (40) étant configuré pour séparer la première partie de signal de la deuxième partie de signal et pour détecter le ou les objets sur la base de la première partie de signal.

13. Système selon l'une des revendications 1 à 12, comprenant au moins une autre source de signal configurée pour émettre au moins un autre signal acoustique en direction du fond marin, dans lequel une longueur d'onde de l'autre signal acoustique est au moins 10% inférieure ou supérieure à la longueur d'onde du signal acoustique, et dans lequel l'autre source de signal est configurée pour émettre l'autre signal acoustique en différé par rapport au signal acoustique.

14. Un module de traitement (40) pour détecter un ou plusieurs objets dans le fond marin, le module de traitement (40) étant configuré pour :
obtenir une information sur au moins un signal acoustique d'une source de signal acoustique (20), une longueur d'onde du signal acoustique étant adaptée à une taille attendue du ou des objets, de telle sorte que la longueur d'onde du signal acoustique correspond à au moins 10% de la taille attendue et à au plus 1000% de la taille attendue du ou des objets ;
obtenir un signal de récepteur à partir d'une pluralité de récepteurs (30), le signal de récepteur étant basé sur une diffusion dudit au moins un signal acoustique au niveau du ou des objets ;
détecter le ou les objets sur la base du signal de récepteur, la détection du ou des objets étant basée sur la diffusion dudit au moins un signal acoustique au niveau du ou des objets.

15. Procédé de détection d'un ou plusieurs objets dans le fond marin, le procédé comprenant le fait de :
émettre (110) un signal acoustique par une source de signal acoustique, une longueur d'onde du signal acoustique étant adaptée à une taille attendue du ou des objets, de sorte que la longueur d'onde du signal acoustique correspond à au moins 10% de la taille attendue et à au plus 1000% de la taille attendue du ou des objets ;
générer (120) un signal de récepteur par une pluralité de récepteurs, dans lequel une distance entre des récepteurs adjacents est au plus égale à la moitié de la longueur d'onde du signal acoustique, le signal de récepteur étant basé sur une diffusion dudit au moins un signal acoustique au niveau du ou des objets ;
détecter (130) le ou les objets sur la base du signal de récepteur, la détection du ou des objets étant basée sur la diffusion dudit au moins un signal acoustique au niveau du ou des objets.
